# EUROPEAN PATENT SPECIFICATION

(11) **EP 3 890 392 B1**
(45) Date of publication and mention of the grant of the patent: **29.05.2024**
(21) Application number: 19907087.1
(22) Date of filing: 31.12.2019
(51) Int. Cl.: H04W 28/02, H04W 8/08, H04W 4/02

(54) **METHOD AND APPARATUS FOR TRANSMITTING OR RECEIVING DATA IN WIRELESS COMMUNICATION SYSTEM**
VERFAHREN UND VORRICHTUNG ZUM SENDEN ODER EMPFANGEN VON DATEN IN EINEM DRAHTLOSKOMMUNIKATIONSSYSTEM
PROCÉDÉ ET APPAREIL D'ÉMISSION OU DE RÉCEPTION DE DONNÉES DANS UN SYSTÈME DE COMMUNICATION SANS FIL

(30) Priority: 31.12.2018 KR 20180174270
(43) Date of publication of application: 06.10.2021
(73) Proprietor: Samsung Electronics Co., Ltd., Suwon-si, Gyeonggi-do 16677 (KR)
(72) Inventor: HWANG, June, Suwon-Si, Gyeonggi-do 16677 (KR); KIM, Soenghun, Suwon-Si, Gyeonggi-do 16677 (KR); VAN DER VELDE, Himke, Suwon-Si, Gyeonggi-do 16677 (KR); BAE, Beomsik, Suwon-Si, Gyeonggi-do 16677 (KR)
(74) Representative: Gulde & Partner
(86) International application number: PCT/KR2019/018810
(87) International publication number: WO 2020/141864

(56) References cited:
- US-A1- 2018 199 306
- US-A1- 2018 324 740
- CATT: "Consideration on Supporting Local LMF in NR Positioning R16", 3GPP DRAFT; R2-1816955, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, USA; 20181112 - 20181116 2 November 2018 (2018-11-02), XP051480894, Retrieved from the Internet: URL:http://www.3gpp.org/ftp/tsg%5Fran/WG2% 5FRL2/TSGR2%5F104/Docs/R2%2D1816955%2Ezip [retrieved on 2018-11-02]
- "3rd Generation Partnership Project; Technical Specification Group Services and System Aspects; Functional stage 2 description of Location Services (LCS) (Release 14)", 3GPP STANDARD; 3GPP TS 23.271, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.0.0, 16 December 2016 (2016-12-16), pages 1-180, XP051229995, [retrieved on 2016-12-16]
- CATT: "Consideration on Supporting Local LMF in NR Positioning R16", R2-1816955. 3GPP TSG RAN WG2 Meeting #104, vol. RAN WG2, 2 November 2018 (2018-11-02) , XP051480894, Spokane, USA
- CATT: "Solution for Local LCS architecture", S 2-1810586 . SA WG2 Meeting #129, vol. SA WG2, 9 October 2018 (2018-10-09), XP051539557, Dongguan, P.R. China
- CMCC: "Consideration on NR positioning architecture", R2-1818555. 3GPP TSG RAN WG2 #104, vol. RAN WG2, 7 November 2018 (2018-11-07) , XP051482401, Spokane, USA
- CHINA MOBILE: "local network exposure with LLMF", S 2-1812083 . SA WG2 Meeting #129bis, vol. SA WG2, 20 November 2018 (2018-11-20) , XP051498819, WEST PALM BEACH, FLORIDA, USA

## Description

### TECHNICAL FIELD

The present disclosure relates to methods and apparatuses for transmitting and receiving data in wireless communication systems. Specifically, the disclosure relates to using a location-based service.

### BACKGROUND ART

In order to meet the increasing demand with respect to wireless data traffic after the commercialization of 4^{th} generation (4G) communication systems, efforts have been made to develop improved 5^{th} generation (5G) communication systems or pre-5G communication systems. For this reason, 5G communication systems or pre-5G communication systems are called 'beyond 4G network communication systems' or 'post long term evolution (LTE) systems'. In order to achieve a high data rate, consideration is given to implementing 5G communication systems in ultra-high frequency bands (millimeter wave (mmW)) (e.g., 60 GHz). In order to reduce the path loss of radio waves and increase a transmission distance of radio waves in ultra-high frequency bands, for 5G communication systems, technologies such as beamforming, massive multiple-input multiple-output (MIMO), full dimensional MIMO (FD-MIMO), array antenna, analog beamforming, and large scale antenna have been discussed. Also, in order to improve networks of systems, in 5G communication systems, development of technologies such as evolved small cell, advanced small cell, cloud radio access network (cloud RAN), ultra-dense network, device-to-device (D2D) communication, wireless backhaul, moving network, cooperative communication, coordinated multi-points (CoMP), and interference cancellation is underway. Furthermore, in 5G communication systems, development of an advanced coding modulation (ACM) scheme such as hybrid frequency-shift keying (FSK) and quadrature amplitude modulation (QAM) modulation (FQAM) or sliding window superposition coding (SWSC) and an enhanced network access scheme such as filter bank multi-carrier (FBMC), non-orthogonal multiple access (NOMA), or sparse code multiple access (SCMA), is underway.

The Internet is evolving from a human-centered connection network through which humans create and consume information to an Internet of Things (IoT) network through which distributed elements such as objects exchange and process information. Internet of Everything (IoE) technology, which is a combination of loT technology and big data processing technology through connection with a cloud server, is also emerging. In order to implement the loT, technology elements such as sensing technology, wired/wireless communication and network infrastructure, service interface technology, and security technology are required, and thus technology for inter-object connection, such as a sensor network, machine to machine (M2M) communication, or machine-type communication (MTC), has recently been studied. In an loT environment, intelligent Internet technology (IT) services that collect and analyze data generated by connected objects and create new value in human life may be provided. The loT may be applied to fields such as smart homes, smart buildings, smart cities, smart cars or connected cars, smart grids, health care, smart home appliances, and advanced medical services through convergence and integration of existing information technology (IT) and various industries.

Accordingly, various attempts have been made to apply 5G communication systems to loT networks. For example, technology such as sensor network, M2M communication, or MTC is implemented by 5G communication technology such as beamforming, MIMO, or array antenna. The application of a cloud RAN as big data processing technology may also be considered as an example of convergence of 5G technology and loT technology.

As described above, as various services may be provided according to the development of mobile communication systems, methods for effectively providing such services are required.

CATT: "Consideration on Supporting Local LMF in NR Positioning R16", 3GPP DRAFT; R2-1816955, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Spokane, USA; 20181112 - 20181116, 2 November 2018, discusses a location service request procedure with Local Location Services (LCS) and proposes to introduce a Local Location Management Function (LMF) function into a Next Generation Radio Access Network (NG-RAN) to further improve the performance of location-based services.

US 2018/1 99306 A1 discloses systems and methods for location of a User Equipment (UE) in a wireless communications system using a positioning protocol for limiting the quantity of signaling between the UE and a Location Server (LS) for location determination.

### DESCRIPTION OF EMBODIMENTS

### TECHNICAL PROBLEM

Disclosed embodiments provide systems and methods capable of effectively providing services in mobile communication systems.

### SOLUTION TO PROBLEM

The invention is defined by the independent claims. Further details thereof are presented in the dependent claims.

### ADVANTAGEOUS EFFECTS OF DISCLOSURE

Disclosed embodiments provide systems and methods capable of effectively providing services in mobile communication systems.

### BRIEF DESCRIPTION OF DRAWINGS

FIG. 1A is a diagram illustrating a structure of a long term evolution (LTE) system, according to some embodiments of the present disclosure.
FIG. 1B is a diagram illustrating a radio protocol architecture in an LTE system, according to some embodiments of the present disclosure.
FIG. 1C is a diagram illustrating a structure of a next generation mobile communication system, according to some embodiments of the present disclosure.
FIG. 1D is a diagram illustrating a radio protocol architecture of a next generation mobile communication system, according to some embodiments of the present disclosure.
FIG. 1E is a block diagram illustrating an internal structure of a terminal, according to some embodiments of the present disclosure.
FIG. 1F is a block diagram illustrating a configuration of a new radio (NR) base station, according to some embodiments of the present disclosure.
FIG. 1G is a block diagram illustrating an architecture of a local location management function (LMF), according to some embodiments of the present disclosure.
FIG. 1H illustrates a protocol stack for communication between a user equipment (UE) and a next generation radio access network (NG RAN) node including a local LMF, according to some embodiments of the present disclosure.
FIG. 1I is a diagram illustrating a protocol stack when a UE and a core network (CN) LMF communicate with each other, through an LTE location protocol (LPP), in LTE and NR, according to some embodiments of the present disclosure.
FIG. 1J is a diagram illustrating an LPP procedure through a CN LMF, according to some embodiments of the present disclosure.
FIG. 1K is a flowchart when a local location management function (LLMF) is used, according to some embodiments of the present disclosure.
FIG. 1L illustrates a case where an access management function (AMF) determines whether to use an LLMF or a CN LMF, according to some embodiments of the present disclosure.
FIG. 1M illustrates a case where an AMF determines whether to use an LLMF or a CN LMF, according to some embodiments of the present disclosure.
FIG. 1N illustrates a case where when an AMF receives a location service (LCS) request from an external client, the AMF uses an LLMF regardless of a state of a UE, according to some embodiments of the present disclosure.
FIG. 2A is a diagram illustrating a structure of an LTE system, according to some embodiments of the present disclosure.
FIG. 2B is a diagram illustrating a radio protocol architecture of an LTE system, according to some embodiments of the present disclosure.
FIG. 2C is a diagram illustrating a structure of a next generation mobile communication system, according to some embodiments of the present disclosure.
FIG. 2D is a diagram illustrating a radio protocol architecture of a next generation mobile communication system, according to some embodiments of the present disclosure.
FIG. 2E is a block diagram illustrating an internal structure of a terminal, according to some embodiments of the present disclosure.
FIG. 2F is a block diagram illustrating a configuration of an NR base station, according to some embodiments of the present disclosure.
FIG. 2G is a signal flowchart during secondary cell (Scell) addition or modification, in carrier aggregation, according to some embodiments of the present disclosure.
FIG. 2H is a flowchart illustrating an operation of a UE during Scell addition/modification, according to some embodiments of the present disclosure.
FIG. 2I is a detailed flowchart illustrating an operation of a terminal during Scell addition/modification, according to some embodiments of the present disclosure.

### MODE OF DISCLOSURE

Hereinafter, embodiments of the present disclosure will be described in detail with reference to the accompanying drawings. While describing the present disclosure, detailed descriptions of related well-known functions or configurations that may blur the points of the present disclosure are omitted. The terms used herein are those defined in consideration of functions in the present disclosure, but the terms may vary according to the intention of users or operators, precedents, etc. Therefore, the terms used herein have to be defined based on the meaning of the terms together with the description throughout the specification.

Hereinafter, terms for identifying access nodes, terms indicating network entities, terms indicating messages, terms indicating interfaces between network entities, and terms indicating various identification information used herein are exemplified for convenience of explanation. Accordingly, the present disclosure is not limited to the terms described below, but other terms indicating objects having equal technical meanings may be used.

Hereinafter, some terms and names defined in the 3^{rd} generation partnership project long term evolution (3GPP LTE) standard may be used for convenience of explanation. However, the present disclosure may not be limited to the terms and names, and may also be applied to systems following other standards.

The advantages and features of the present disclosure and methods of achieving them will become apparent with reference to embodiments of the present disclosure described in detail below along with the attached drawings. The present disclosure may, however, be embodied in many different forms and should not be construed as limited to embodiments of the present disclosure set forth herein; rather these embodiments of the present disclosure are provided so that this disclosure will be thorough and complete, and will fully convey the scope of the present disclosure to one of ordinary skill in the art, and the scope of the present disclosure is defined only by the accompanying claims. In the specification, the same reference numerals denote the same elements.

It will be understood that each block of flowchart illustrations and combinations of blocks in the flowchart illustrations may be implemented by computer program instructions. Because these computer program instructions may be loaded into a processor of a general-purpose computer, special purpose computer, or other programmable data processing equipment, the instructions, which are executed via the processor of the computer or other programmable data processing equipment generate means for implementing the functions specified in the flowchart block(s). Because these computer program instructions may also be stored in a computer-executable or computer-readable memory that may direct a computer or other programmable data processing equipment to function in a particular manner, the instructions stored in the computer- executable or computer-readable memory may produce a manufactured article including instruction means that implement the functions specified in the flowchart block(s). Because the computer program instructions may also be loaded onto a computer or other programmable data processing equipment, a series of operational steps may be performed on the computer or other programmable data processing equipment to produce a computer-executable process, and thus the instructions executed on the computer or other programmable data processing equipment may provide steps for implementing the functions specified in the flowchart block(s).

Also, each block may represent a module, segment, or portion of code, which includes one or more executable instructions for implementing specified logical function(s). It should also be noted that in some alternative implementations, the functions noted in the blocks may occur out of the order shown. For example, two blocks shown in succession may in fact be executed substantially concurrently or the blocks may sometimes be executed in the reverse order, according to the functionality involved.

The term "~ unit" used in the present embodiment refers to a software or hardware component, such as a field-programmable gate array (FPGA) or an application-specific integrated circuit (ASIC), which performs certain tasks. However, "~ unit" does not mean to be limited to software or hardware. The term "~ unit" may be configured to be in an addressable storage medium or may be configured to operate one or more processors. Thus, "~ unit" may include, by way of example, components, such as software components, object-oriented software components, class components, and task components, processes, functions, attributes, procedures, subroutines, segments of program code, drivers, firmware, microcode, circuitry, data, databases, data structures, tables, arrays, and variables. The functionality provided in components and "~ units" may be combined into fewer components and "~ units" or further separated into additional components and "~ units". Furthermore, components and "~ units" may be implemented to operate one or more central processing units (CPUs) in a device or a secure multimedia card. Also, a unit in an embodiment may include one or more processors.

While describing the present disclosure, detailed descriptions of related well-known functions or configurations that may blur the points of the present disclosure are omitted. Hereinafter, embodiments of the present disclosure will be described with reference to the drawings.

Hereinafter, terms for identifying access nodes, terms indicating network entities, terms indicating messages, terms indicating interfaces between network entities, and terms indicating various identification information used herein are exemplified for convenience of explanation. Accordingly, the present disclosure is not limited to the terms described below, but other terms indicating objects having equal technical meanings may be used. For example, hereinafter, a terminal may refer to a medium access control (MAC) entity in the terminal existing for each master cell group (MCG) or secondary cell group (SCG).

Hereinafter, some terms and names defined in the 3^{rd} generation partnership project long term evolution (3GPP LTE) standard may be used for convenience of explanation. However, the present disclosure may not be limited to the terms and names, and may also be applied to systems following other standards.

Hereinafter, a base station is an entity performing resource allocation for a terminal and may include at least one of a gNode B, an eNode B, a node B, a base station (BS), a radio access unit, a base station controller, and a node on a network. A terminal may include a user equipment (UE), a mobile station (MS), a cellular phone, a smartphone, a computer, or a multimedia system capable of performing a communication function. However, the present disclosure is not limited to the above examples.

In particular, the present disclosure may be applied to 3GPP NR (5G mobile communication standard). Also, the present disclosure may be applied to intelligent services based on 5G communication technology and Internet of Things (IoT)-related technology (e.g., smart home, smart building, smart city, smart car or connected car, health care, digital education, retail business, security, and safety-related services). In the present disclosure, an eNB may be interchangeably used with a gNB for convenience of explanation. That is, a base station described as an eNB may refer to a gNB. Also, the term "terminal" may refer to other wireless communication devices as well as mobile phones, NB-loT devices, and sensors.

A wireless communication system has developed beyond the initially provided voice-based service into a broadband wireless communication system that provides a high speed and high quality packet data service, using communication standards such as high-speed packet access (HSPA) of 3^{rd} generation partnership project (3GPP), long term evolution (LTE) or evolved universal terrestrial radio access (E-UTRA), LTE-advanced (LTE-A), LTE-Pro, high-rate packet data (HRPD) of 3GPP2, ultra-mobile broadband (UMB), and 802.16e of Institute of Electrical and Electronics Engineers (IEEE).

An LTE system, which is a representative example of a broadband wireless communication system, employs an orthogonal frequency division multiplexing (OFDM) scheme for a downlink (DL), and employs a single carrier frequency division multiple access (SC-FDMA) scheme for an uplink (UL). The uplink is a radio link through which a terminal (e.g., a user equipment (UE) or a mobile station (MS)) transmits data or a control signal to a base station (e.g., an eNode B or a base station (BS)), and the downlink is a radio link through which the base station transmits data or a control signal to the terminal. In the multiple access scheme, time-frequency resources for carrying data or control information are allocated and operated in a manner to prevent overlapping of the resources, i.e., to establish orthogonality between users so as to identify data or control information of each user.

As future communication systems after LTE, 5G communication systems should be able to freely reflect various requirements of users and service providers, and thus services simultaneously satisfying the various requirements should be supported. Services considered for 5G communication systems include enhanced mobile broadband (eMBB), massive machine type communication (mMTC), and ultra-reliable low-latency communication (URLLC).

According to some embodiments, eMBB may aim to provide a higher data rate than a data rate supported by LTE, LTE-A, or LTE-Pro. For example, in a 5G communication system, eMBB should be able to provide a peak data rate of 20 gigabits per second (Gbps) in a downlink and a peak data rate of 10 Gbps in an uplink with respect to one base station. Furthermore, the 5G communication system should be able to provide an increased user-perceived data rate of a terminal while providing the peak data rate. In order to satisfy such requirements, in the 5G communication system, various transmission and reception technologies including a further enhanced MIMO transmission technology must be improved. Furthermore, an LTE system transmits a signal by using a maximum transmission bandwidth of 20 megahertz (MHz) in a frequency band of 2 gigahertz (GHz). In contrast, the 5G communication system transmits a signal by using a frequency bandwidth wider than 20 MHz in a frequency band of 3 to 6 GHz or more, and thus may satisfy the data rate requirements necessary for the 5G communication system.

Furthermore, in the 5G communication system, mMTC is considered to support application services such as Internet of Things (IoT). In order for mMTC to efficiently provide the loT, access by many terminals within a single cell, coverage improvement of a terminal, an increased battery time, reduced costs of a terminal, etc. may be required. The loT is attached to various sensors and various devices to provide a communication function, and thus should be able to support many terminals (e.g., 1,000,000 terminals/km²) within a cell. Furthermore, because a terminal supporting mMTC is likely to be located in a shaded area that a cell does not cover such as in the basement of a building, wider coverage than other services provided by the 5G communication system may be required. Because the terminal supporting mMTC should include a cheap terminal and it is difficult to replace a battery of the terminal frequently, a very long battery life time (e.g., 10-15 years) may be required.

Lastly, URLLC is a cellular-based wireless communication service used for mission-critical purposes, and may be used in remote control of robots or machinery, industrial automation, unmanned aerial vehicles, remote health care, emergency alert, etc. Accordingly, communication provided by URLLC may have to provide very low latency (ultra-low latency) and very high reliability (ultra-high reliability). For example, services supporting URLLC should meet an air interface latency of less than 0.5 milliseconds and simultaneously have a requirement of a packet error rate of 10⁻⁵ or less. Accordingly, for services supporting URLLC, the 5G system should provide a transmission time interval (TTI) less than that of other services, and a design for broad resource allocation in a frequency band in order to ensure the reliability of a communication link may be required.

Three services considered for the 5G communication system, that are, eMBB, URLLC, and mMTC, may be multiplexed and transmitted in one system. In this case, in order to satisfy different requirements of the services, different transmission and reception schemes and transmission/reception parameters may be used between the services. However, the mMTC, URLLC, and eMBB are examples of different service types, and service types to which the present disclosure is applied are not limited thereto.

Also, although embodiments of the present disclosure will be described based on an LTE, LTE-A, LTE Pro, or 5G (or NR, next generation mobile communication) system, the embodiments of the present disclosure may be applied to other communication systems having a similar technical background or channel type. Also, the embodiments of the present disclosure may be applied to other communication systems through some modifications without departing from the scope of the present disclosure based on a determination by one of ordinary skill in the art.

In the present disclosure, a method of adding a region-based location management function server so that a terminal distinguishes two entities respectively corresponding to a location management function server in an existing core network and the added region-based location management function server, and using different entities when necessary will be described.

According to a disclosed embodiment, in a wireless communication system, a location management function server for determining a location of a terminal is located at a radio access network end, and thus, when a base station uses a terminal location service, a latency time may be reduced.

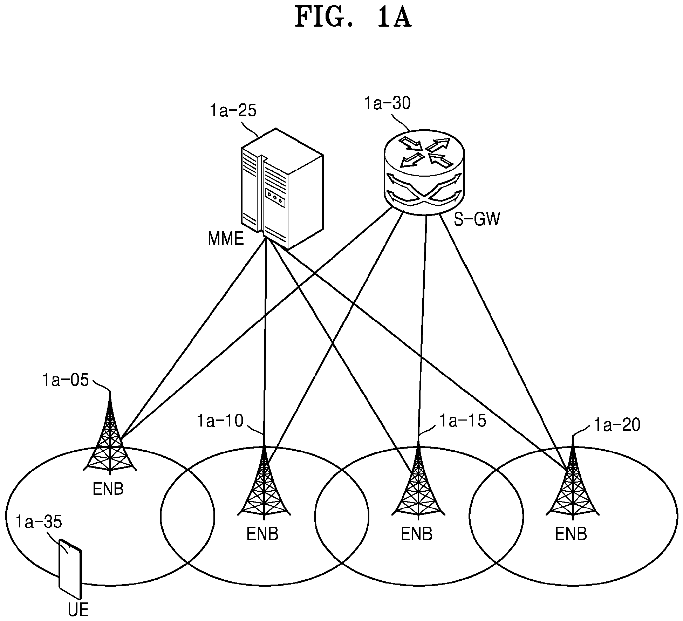

FIG. 1A is a diagram illustrating a structure of an LTE system, according to some embodiments of the present disclosure.

Referring to FIG. 1A, a radio access network of an LTE system may include next generation base stations (hereinafter, evolved node Bs (ENBs), node Bs, or base stations) 1a-05, 1a-10, 1a-15, and 1a-20, a mobility management entity (MME) 1a-25, and a serving-gateway (S-GW) 1a-30. A user terminal (hereinafter, a user equipment (UE) or a terminal) 1a-35 may access an external network via the ENBs 1a-05 through 1a-20 and the S-GW 1a-30.

In FIG. 1A, the ENBs 1a-05 through 1a-20 may correspond to existing node Bs of a universal mobile telecommunication system (UMTS). The ENBs may be connected to the UE 1a-35 via a wireless channel and may perform a more complicated function than the existing node Bs. In the LTE system, all user traffic including a real-time service such as a voice over Internet protocol (VoIP) may be serviced through a shared channel. Accordingly, an apparatus that collects state information such as a buffer state, an available transmission power state, a channel state, or the like of UEs, and schedules the state information may be required, and the ENBs 1a-05 through 1a-20 may perform this function. One ENB may typically control multiple cells. For example, to achieve a data rate of 100 Mbps, the LTE system may use orthogonal frequency division multiplexing (OFDM) as radio access technology (RAT) at a bandwidth of, for example, 20 MHz. Also, the ENB may use an adaptive modulation and coding (AMC) scheme that determines a modulation scheme and a channel coding rate according to a channel state of a terminal. The S-GW 1a-30 is a device that provides a data bearer, and may generate or remove a data bearer under the control by the MME 1a-25. The MME is a device that performs various control functions as well as a mobility management function for the terminal, and may be connected to a plurality of base stations.

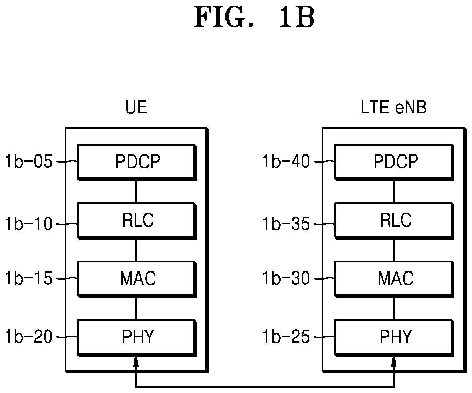

FIG. 1B is a diagram illustrating a radio protocol architecture in an LTE system, according to some embodiments of the present disclosure.

Referring to FIG. 1B, in each of a terminal and an ENB, a radio protocol of an LTE system may include a packet data convergence protocol (PDCP) 1b-05/1 b-40, a radio link control (RLC) 1b-10/1b-35, and a medium access control (MAC) 1b-15/1b-30. A PDCP may be in charge of operations such as IP header compression/decompression. The main functions of the PDCP may be summarized as follows. However, the present disclosure is not limited to the following examples.
- Header compression and decompression: robust header compression (ROHC) only
- Transfer of user data
- In-sequence delivery of upper layer protocol data units (PDUs) at PDCP re-establishment procedure for RLC acknowledged mode (AM)
- For split bearers in dual connectivity (DC) (only support for RLC AM): PDCP PDU routing for transmission and PDCP PDU reordering for reception
- Duplicate detection of lower layer service data units (SDUs) at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

According to some embodiments, the RLC 1b-10 or 1b-35 may reconfigure a PDCP PDU in an appropriate size and may perform an automatic repeat request (ARQ) operation or the like.The main functions of an RLC may be summarized as follows. However, the present disclosure is not limited to the following examples.
- Transfer of upper layer PDUs
- ARQ (error correction through ARQ (only for AM data transfer))
- Concatenation, segmentation, and reassembly of RLC SDUs (only for unacknowledged mode (UM) and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

According to some embodiments, the MAC 1b-15 or 1b-30 is connected to several RLC entities configured in one terminal, and may multiplex RLC PDUs to MAC PDUs and demultiplex RLC PDUs from MAC PDUs. The main functions of a MAC may be summarized as follows. However, the present disclosure is not limited to the following examples.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Hybrid ARQ (HARQ) (error correction through HARQ)
- Priority handling between logical channels of one UE
- Priority handling between UEs by means of dynamic scheduling
- Multimedia broadcast multicast service (MBMS) service identification
- Transport format selection
- Padding

According to some embodiments, a physical layer (PHY) 1b-20 or 1b-25 may channel-code and modulate higher layer data into OFDM symbols and transmit the OFDM symbols via a wireless channel, or may demodulate and channel-decode OFDM symbols received via a wireless channel and transfer the channel-decoded OFDM symbols to a higher layer. However, the present disclosure is not limited to the following examples.

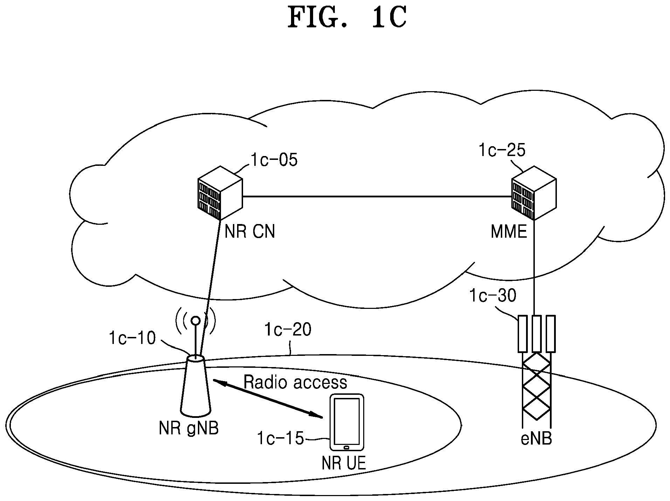

FIG. 1C is a diagram illustrating a structure of a next generation mobile communication system, according to some embodiments of the present disclosure.

Referring to FIG. 1C, a radio access network of a next generation mobile communication system (hereinafter, NR or 5G) may include a next generation base station (hereinafter, a new radio node B (NR gNB) or an NR base station) 1c-10 and a new radio core network (NR CN) 1c-05. A new radio user equipment (NR UE) 1c-15 may access an external network via the NR gNB 1c-10 and the NR CN 1c-05.

In FIG. 1C, the NR gNB 1c-10 may correspond to an evolved node B (eNB) of an existing LTE system. The NR gNB is connected to the NR UE 1c-15 via a wireless channel and may provide far better services than an existing node B. In the next generation mobile communication system, all user traffic may be serviced through a shared channel. Accordingly, an apparatus that collects state information such as a buffer state, an available transmission power state, a channel state, or the like of UEs, and schedules the state information may be required, and the NR gNB 1c-10 may perform this function. One NR gNB may control multiple cells. In the next generation mobile communication system, to achieve high-speed data transmission compared to the current LTE system, a greater bandwidth than a current maximum bandwidth may be applied. Also, beamforming technology may be additionally used with OFDM as RAT.

Also, according to some embodiments, the NR gNB may use an adaptive modulation and coding (AMC) scheme that determines a modulation scheme and a channel coding rate according to a channel state of a terminal. The NR CN 1c-05 may perform functions such as mobility support, bearer configuration, and quality of service (QoS) configuration. The NR CN 1c-05 is a device that performs various control functions as well as a mobility management function for the terminal, and may be connected to a plurality of base stations. Also, the next generation mobile communication system may interoperate with the existing LTE system, and the NR CN may be connected to an MME 1c-25 via a network interface. The MME may be connected to an eNB 1c-30 that is an existing base station.

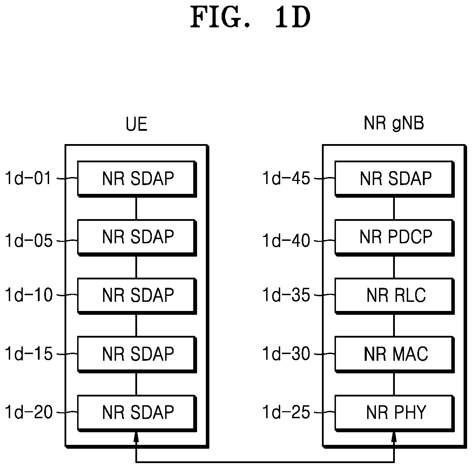

FIG. 1D is a diagram illustrating a radio protocol architecture of a next generation mobile communication system, according to some embodiments of the present disclosure.

Referring to FIG. 1D, in each of a terminal and an NR base station, a radio protocol of a next generation mobile communication system may include an NR service data adaptation protocol (SOAP) 1d-01/1d-45, an NR PDCP 1d-05/1d-40, an NR RLC 1d-10/1d-35, and an NR MAC 1d-15/1d-30.

According to some embodiments, the main functions of the NR SOAP 1d-01 or 1d-45 may include some of the following functions. However, the present disclosure is not limited to the following examples.
- Transfer of user plane data
- Mapping between a QoS flow and a data radio bearer (DRB) for both downlink (DL) and uplink (UL)
- Marking QoS flow ID in both DL and UL packets
- Reflective QoS flow to DRB mapping for the UL SOAP PDUs

With respect to an SOAP entity, a terminal may be configured, through a radio resource control (RRC) message, as to whether to use a header of the SOAP entity or a function of the SOAP entity for each PDCP entity, bearer, or logical channel. Also, when an SOAP header is configured, a 1-bit non-access stratum (NAS) reflective QoS configuration indicator and a 1-bit access stratum (AS) reflective QoS configuration indicator of the SOAP header may indicate the terminal to update or reconfigure mapping information between a QoS flow and a data bearer for an UL and a DL. According to some embodiments, the SOAP header may include QoS flow ID information indicating QoS. According to some embodiments, QoS information may be used as data processing priority and scheduling information for supporting smooth services.

According to some embodiments, the main functions of the NR PDCP 1d-05 or 1d-40 may include some of the following functions. However, the present disclosure is not limited to the following examples.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above description, a reordering function of an NR PDCP entity may indicate a function of reordering PDCP PDUs received from a lower layer based on PDCP sequence numbers (SNs). The reordering function of the NR PDCP entity may include a function of delivering data to a higher layer in a reordered order, a function of directly delivering data without considering the order, a function of reordering the order and recording lost PDCP PDUs, a function of reporting a state of the lost PDCP PDUs to a transmission side, and a function of requesting retransmission of the lost PDCP PDUs.

According to some embodiments, the main functions of the NR RLC 1d-10 or 1d-35 may include some of the following functions. However, the present disclosure is not limited to the following examples.
- Transfer of upper layer PDUs
- In-sequence delivery of upper layer PDUs
- Out-of-sequence delivery of upper layer PDUs
- ARQ (error correction through ARQ)
- Concatenation, segmentation, and reassembly of RLC SDUs
- Re-segmentation of RLC data PDUs
- Reordering of RLC data PDUs
- Duplicate detection
- Protocol error detection
- RLC SDU discard
- RLC re-establishment

In the above description, an in-sequence delivery function of an NR RLC entity may indicate a function of in-sequence delivering RLC SDUs received from a lower layer to a higher layer. When one original RLC SDU is segmented into multiple RLC SDUs and received, the in-sequence delivery function of the NR RLC entity may include a function of reassembling the RLC SDUs and delivering the RLC SDUs.

The in-sequence delivery function of the NR RLC entity may include a function of reordering the received RLC PDUs based on RLC SNs or PDCP SNs. Also, the in-sequence delivery function of the NR RLC entity may include a function of reordering the order and recording lost PDCP PDUs, a function of reporting a state of the lost PDCP PDUs to a transmission side, and a function of requesting retransmission of the lost PDCP PDUs.

When there are the lost RLC SDUs, the in-sequence delivery function of the NR RLC entity may include a function of in-sequence delivering only RLC SDUs before the lost RLC SDU to a higher layer.

Also, when a certain timer expires although there are the lost RLC SDUs, the in-sequence delivery function of the NR RLC entity may include a function of in-sequence delivering all RLC SDUs received before the certain timer starts to a higher layer.

When a certain timer expires although there are the lost RLC SDUs, the in-sequence delivery function of the NR RLC entity may include a function of in-sequence delivering all RLC SDUs received up to now to a higher layer.

The NR RLC entity may process RLC PDUs in an order of reception regardless of an order of SNs and may deliver the processed RLC PDUs to an NR PDCP entity in an out-of sequence delivery manner.

When the NR RLC entity receives segments, the NR RLC entity may receive segments that are stored in a buffer or to be received later, may reconfigure the segments into one complete RLC PDU, and then may deliver the RLC PDU to the NR PDCP entity.

The NR RLC entity may not include a concatenation function, and the function may be performed by an NR MAC entity or may be replaced by a multiplexing function of the NR MAC entity.

In the above description, an out-of-sequence delivery function of the NR RLC entity may indicate a function of delivering RLC SDUs received from a lower layer directly to a higher layer regardless of an order. When one original RLC SDU is segmented into multiple RLC SDUs and received, the out-of-sequence delivery function of the NR RLC entity may include a function of reassembling the RLC SDUs and delivering the RLC SDUs. The out-of-sequence delivery function of the NR RLC entity may include a function of storing and ordering RLC SNs or PDCP SNs of the received RLC PDUs and recording lost RLC PDUs.

According to some embodiments, the NR MAC 1d-15 or 1d-30 may be connected to several NR RLC entities configured in one terminal, and the main functions of the NR MAC may include some of the following functions. However, the present disclosure is not limited to the following examples.
- Mapping between logical channels and transport channels
- Multiplexing/demultiplexing of MAC SDUs
- Scheduling information reporting
- HARQ (error correction through HARQ)
- Priority handling between logical channels of one UE
- Priority handling between UEs by means of dynamic scheduling
- MBMS service identification
- Transport format selection
- Padding

An NR PHY 1d-20 or 1d-25 may channel-code and modulate higher layer data into OFDM symbols and transmit the OFDM symbols via a wireless channel, or may demodulate OFDM symbols received via a wireless channel, channel-decode the demodulated OFDM symbols, and transfer the channel-decoded OFDM symbols to a higher layer.

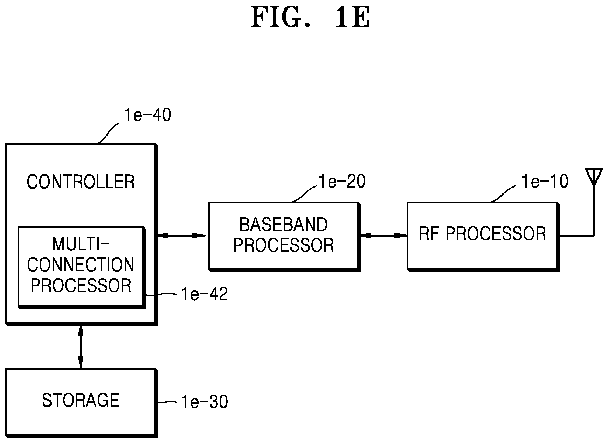

FIG. 1E is a block diagram illustrating an internal structure of a terminal, according to some embodiments of the present disclosure.

Referring to FIG. 1E, a terminal may include a radio frequency (RF) processor 1e-10, a baseband processor 1e-20, a storage 1e-30, and a controller 1e-40. However, the present disclosure is not limited thereto, and the terminal may include more or fewer elements than those illustrated in FIG. 1E.

The RF processor 1e-10 may perform a function of transmitting and receiving a signal via a wireless channel, such as signal band conversion or amplification. That is, the RF processor 1e-10 may up-convert a baseband signal received from the baseband processor 1e-20 into an RF band signal and transmit the same via an antenna, and may down-convert an RF band signal received via an antenna into a baseband signal. For example, the RF processor 1e-10 may include a transmission filter, a reception filter, an amplifier, a mixer, an oscillator, a digital-to-analog convertor (DAC), an analog-to-digital convertor (ADC), or the like. However, the present disclosure is not limited thereto. Although only one antenna is illustrated in FIG. 1E, the terminal may include a plurality of antennas. Also, the RF processor 1e-10 may include a plurality of RF chains. Furthermore, the RF processor 1e-10 may perform beamforming. For beamforming, the RF processor 1e-10 may adjust a phase and magnitude of each of signals transmitted and received via a plurality of antennas or antenna elements. Also, the RF processor 1e-10 may perform multiple-input multiple-output (MIMO), and may receive several layers during a MIMO operation.

The baseband processor 1e-20 performs a conversion function between a baseband signal and a bit string according to the physical layer specifications of a system. For example, during data transmission, the baseband processor 1e-20 may generate complex symbols by encoding and modulating a transmitted bit string. Also, during data reception, the baseband processor 1e-20 may restore a received bit string by demodulating and decoding a baseband signal received from the RF processor 1e-10. For example, according to an OFDM scheme, during data transmission, the baseband processor 1e-20 may generate complex symbols by encoding and modulating a transmitted bit string, map the complex symbols to subcarriers, and then configure OFDM symbols through an inverse fast Fourier transform (IFFT) operation and cyclic prefix (CP) insertion. Also, during data reception, the baseband processor 1e-20 may divide a baseband signal received from the RF processor 1e-10 into units of OFDM symbols, restore signals mapped to subcarriers through a fast Fourier transform (FFT) operation, and then restore a received bit string through demodulation and decoding.

The baseband processor 1e-20 and the RF processor 1e-10 transmit and receive a signal as described above. Accordingly, the baseband processor 1e-20 and the RF processor 1e-10 may each be referred to as a transmitter, a receiver, a transceiver, or a communicator. Furthermore, at least one of the baseband processor 1e-20 or the RF processor 1e-10 may include a plurality of communication modules to support different multiple RATs. In addition, at least one of the baseband processor 1e-20 or the RF processor 1e-10 may include different communication modules to process signals of different frequency bands. For example, the different RATs may include a wireless local area network (LAN) (e.g., IEEE 802.11) and a cellular network (e.g., LTE). Also, the different frequency bands may include a super high frequency (SHF) (e.g., 2. NRHz or NRhz) band and a millimeter (mm) wave (e.g., 60 GHz) band. The terminal may transmit and receive a signal to and from a base station by using the baseband processor 1e-20 and the RF processor 1e-10, and the signal may include control information and data.

The storage 1e-30 stores data such as a basic program for an operation of the terminal, an application program, or configuration information. In particular, the storage 1e-30 may store information related to a second access node performing wireless communication by using second RAT. Also, the storage 1e-30 provides stored data according to a request from the controller 1e-40. The storage 1e-30 may include a storage medium such as a read-only memory (ROM), a random-access memory (RAM), a hard disk, a compact disc-ROM (CD-ROM), or a digital versatile disk (DVD), or a combination thereof. Also, the storage 1e-30 may include a plurality of memories.

The controller 1e-40 controls overall operations of the terminal. For example, the controller 1e-40 transmits and receives a signal via the baseband processor 1e-20 and the RF processor 1e-10. Also, the controller 1e-40 records and reads data to and from the storage 1e-30. To this end, the controller 1e-40 may include at least one processor. For example, the controller 1e-40 may include a communication processor (CP) for performing control for communication and an application processor (AP) for controlling a higher layer such as an application program. Also, at least one element in the terminal may be implemented as one chip.

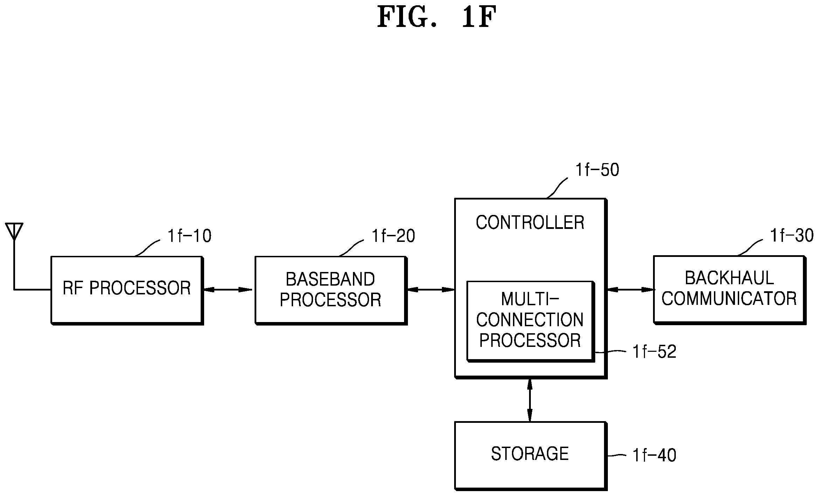

FIG. 1F is a block diagram illustrating a configuration of an NR base station, according to some embodiments of the present disclosure.

Referring to FIG. 1F, a base station may include an RF processor 1f-10, a baseband processor 1f-20, a backhaul communicator 1f-30, a storage 1f-40, and a controller 1f-50. However, the present disclosure is not limited thereto, and the base station may include more or fewer elements than those illustrated in FIG. 1F.

The RF processor 1f-10 may perform a function of transmitting and receiving a signal via a wireless channel, such as signal band conversion or amplification. That is, the RF processor 1f-10 up-converts a baseband signal received from the baseband processor 1f-20 into an RF band signal and transmits the same via an antenna, and down-converts an RF band signal received via an antenna into a baseband signal. For example, the RF processor 1f-10 may include a transmission filter, a reception filter, an amplifier, a mixer, an oscillator, a DAC, an ADC, or the like. Although only one antenna is illustrated in FIG. 1F, the RF processor 1f-10 may include a plurality of antennas. Also, the RF processor 1f-10 may include a plurality of RF chains. Also, the RF processor 1f-10 may perform beamforming. For beamforming, the RF processor 1f-10 may adjust a phase and magnitude of each of signals transmitted and received via a plurality of antennas or antenna elements. The RF processor may perform a down MIMO operation by transmitting at least one layer.

The baseband processor 1f-20 performs a conversion function between a baseband signal and a bit string according to the physical layer specifications of first RAT. For example, during data transmission, the baseband processor 1f-20 may generate complex symbols by encoding and modulating a transmitted bit string. Also, during data reception, the baseband processor 1f-20 may restore a received bit string by demodulating and decoding a baseband signal received from the RF processor 1f-10. For example, according to an OFDM scheme, during data transmission, the baseband processor 1f-20 may generate complex symbols by encoding and modulating a transmitted bit string, map the complex symbols to subcarriers, and then configure OFDM symbols through an IFFT operation and CP insertion. Also, during data reception, the baseband processor 1f-20 may divide a baseband signal received from the RF processor 1f-10 into units of OFDM symbols, restore signals mapped to subcarriers through an FFT operation, and then restore a received bit string through demodulation and decoding. The baseband processor 1f-20 and the RF processor 1f-10 transmit and receive a signal as described above. Accordingly, the baseband processor 1f-20 and the RF processor 1f-10 may each be referred to as a transmitter, a receiver, a transceiver, a communicator, or a wireless communicator. The base station may transmit and receive a signal to and from a terminal by using the baseband processor 1f-20 and the RF processor 1f-10, and the signal may include control information and data.

The backhaul communicator 1f-30 provides an interface for performing communication with other nodes in a network. That is, the backhaul communicator 1f-30 may convert a bit string transmitted from a main base station to another node such as a sub-base station or a core network into a physical signal, and may convert a physical signal received from the other node into a bit string. The backhaul communicator 1f-30 may be included in a communicator.

The storage 1f-40 stores data such as a basic program for an operation of the base station, an application program, or configuration information. The storage 1f-40 may store information on a bearer allocated to a connected terminal and a measurement result reported from the connected terminal. Also, the storage 1f-40 may store information that becomes a basis of determination whether to provide or suspend multi-connections to the terminal. Also, the storage 1f-40 provides stored data according to a request from the controller 1f-50. The storage 1f-40 may include a storage medium such as a ROM, a RAM, a hard disk, a CD-ROM, or a DVD, or a combination thereof. Also, the storage 1f-40 may include a plurality of memories. According to some embodiments, the storage 1f-40 may store a program for performing a buffer state reporting method according to the present disclosure.

The controller 1f-50 controls overall operations of the base station. For example, the controller 1f-50 transmits and receives a signal via the baseband processor 1f-20 and the RF processor 1f-10 or via the backhaul communicator 1f-30. Also, the controller 1f-50 records and reads data to and from the storage 1f-40. To this end, the controller 1f-50 may include at least one processor. Also, at least one element of the base station may be implemented as one chip.

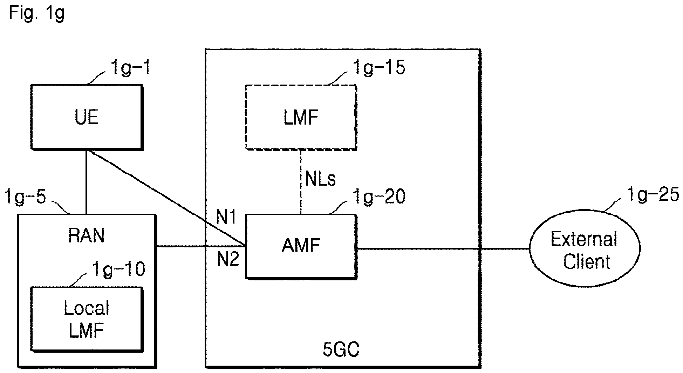

FIG. 1G is a block diagram illustrating an architecture of a local location management function (LMF), according to some embodiments of the present disclosure. A UE 1g-1 may be connected to a radio access network (RAN) node 1g-5. The RAN node 1g-5 may be an LTE eNB or an NR gNB. Accordingly, the UE and the RAN node 1g-5 may be connected to each other via an LTE-Uu or NR-Uu. A local LMF 1g-10 may be installed in the RAN node 1g-5. Accordingly, a separate interface may not exist in the local LMF 1g-10 and in the RAN node 1g-5 in which the local LMF 1g-10 exists. The RAN node 1g-5 and an AMF 1g-20 may communicate with each other via an N2 interface. The UE 1g-1 and the AMF 1g-20 may communicate with each other via an N1 interface, by using a NAS protocol. In 5G core (5GC), an LMF 1g-15 may exist, and when all functions are transferred to the local LMF 1g-10, the LMF 1g-15 may not exist. Because an LMF is introduced in existing Release, an existing LMF is referred to as a CN LMF, and a case where a local LMF and a CN LMF coexist is considered. An entity that requests a location service outside 5GC is referred to as an external client 1g-25, and may trigger a location service. The external client 1g-25 may be a server that requires location information of the UE 1g-1.

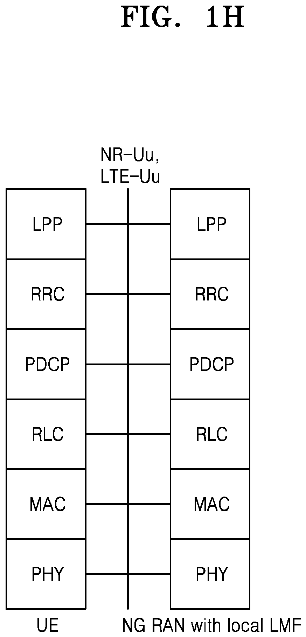

FIG. 1H illustrates a protocol stack for communication between a UE and a next generation (NG) RAN including a local LMF, according to some embodiments of the present disclosure. Here, PHY, MAC, RLC, and PDCP layers may perform functions of PHY, MAC, RLC, and PDCP layers described with reference to FIG. 1D. In addition, an RRC layer may include messages of a location-related protocol, including an LTE location protocol (LPP), which is a protocol for generating control signals, (hereinafter, location-related protocols are collectively referred to as LPP), and may transmit the same to a lower layer. Also, a UE and an NG RAN including a local LMF may transmit a location-related control signal and message through an LPP.

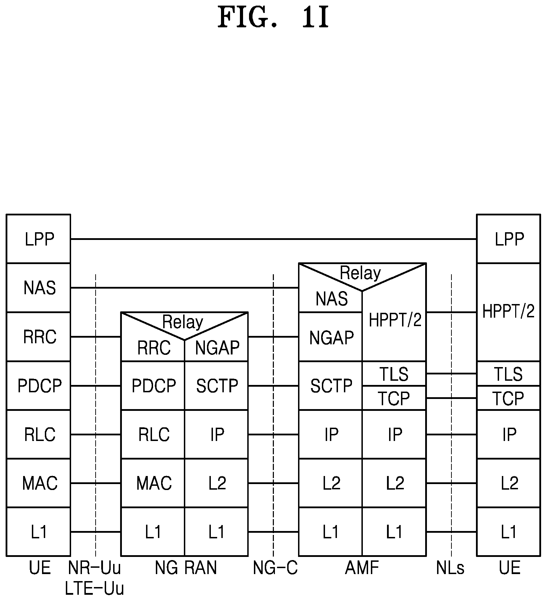

FIG. 1I is a diagram illustrating a protocol stack when a UE and a CN LMF communicate with each other, through an LPP, in LTE and NR, according to some embodiments of the present disclosure. In FIG. 1I, a NAS layer may be further provided between an LPP layer and an RRC layer of a UE illustrated in FIG. 1H. A UE may encapsulate an LPP message in a NAS message, and may encapsulate the NAS message in an RRC message. An NG RAN node may analyze the RRC message, and may transmit the NAS message in the analyzed RRC message to an AMF. The AMF may analyze the NAS message, and may transmit the LPP message to the CN LMF again. In a direction opposite to the described direction, when the CN LMF generates the LPP message, the CN LMF may transmit the LPP message to the AMF, and the AMF may encapsulate the LPP message in the NAS message and may transmit the NAS message to the NG RAN node. The NG RAN node may encapsulate the NAS message including the LPP message in the RRC message and may transmit the same to the UE again.

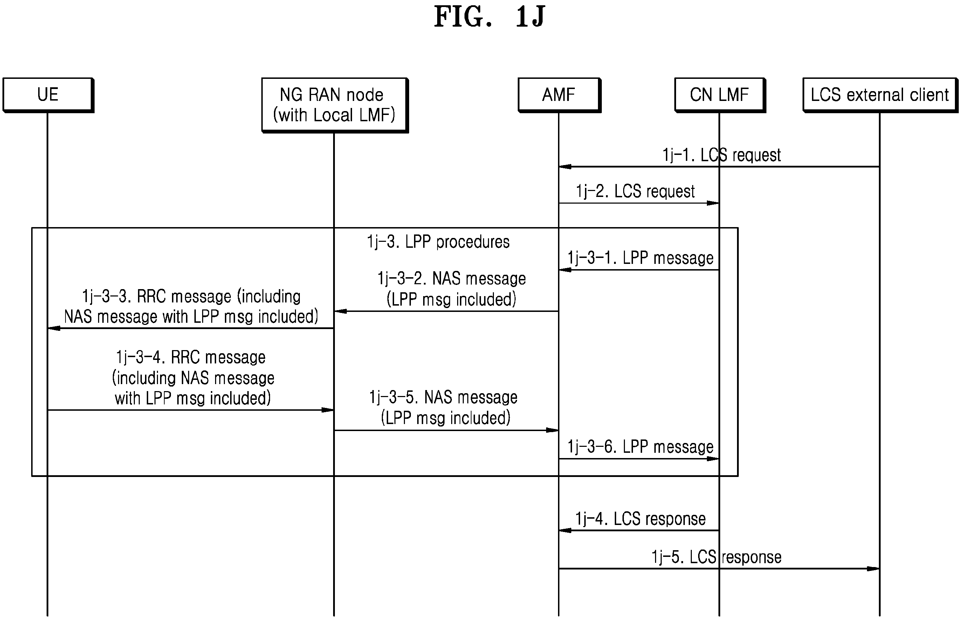

FIG. 1J is a diagram illustrating an LPP procedure through a CN LMF, according to some embodiments of the present disclosure. A location service (LCS) request may be performed by an LCS external client. Information for recognizing a UE that needs LCS information may be included in the LCS request. The LCS request may be transmitted to an AMF. The AMF may recognize the UE included in the LCS request, may identify a RAN node where a service is provided, and may transmit the LCS request including RAN node information (cell and base station identification information) to a CN LMF. From then on, the CN LMF may perform an LPP procedure with the UE in a one-to-one manner. The LMF may perform communication with the UE by using a protocol stack in FIG. 1I. When the LMF transmits a message for position request information to the AMF, the AMF may encapsulate the message in a NAS message and may transmit the NAS message to the RAN node to which the UE connects. The RAN node may encapsulate the NAS message in an RRC message and may transmit the RRC message to the UE. When the UE receives the RRC message, the UE may process a PDU to obtain a NAS PDU, and may process the NAS PDU to obtain an LPP message.The UE may encapsulate an LPP response message in the NAS message, may add the NAS message to an RRC message again, and may transmit the same to the RAN node corresponding to the procedure. The RAN node may process the RRC PDU and may transmit only the NAS message to the AMF.

The AMF may process the NAS PDU, and may transmit the LPP message to the CN LMF. The CN LMF may receive the LPP message, and the AMF may receive a response to the LCS request. The AMF may transmit the response to the LCS request to the LCS external client which triggered the LCS request through the AMF.

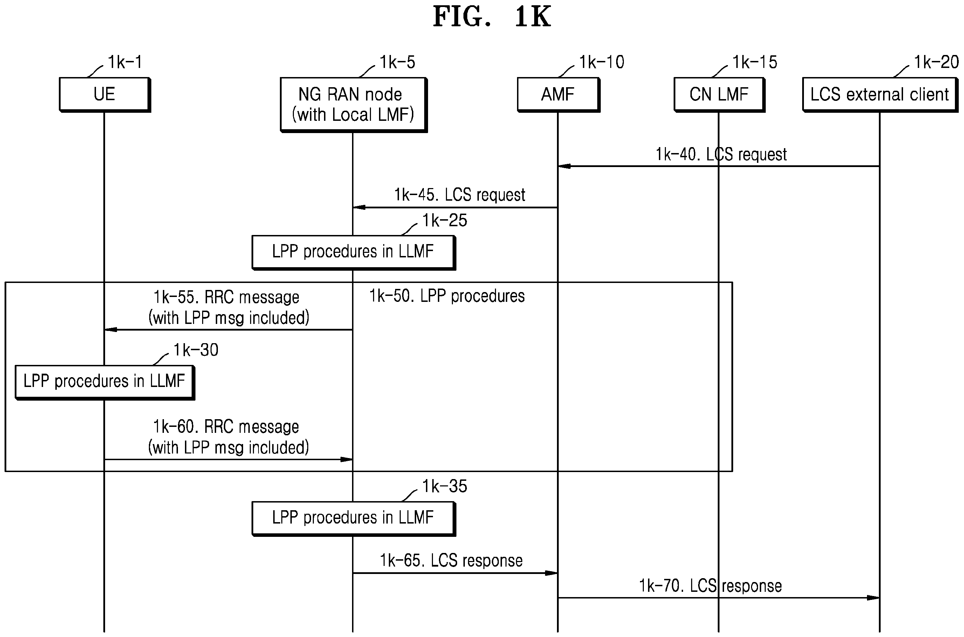

FIG. 1K is a flowchart when a local location management function (LLMF) is used, according to an embodiment of the present disclosure. A UE 1k-1 may be connected to an NG RAN node 1k-5, or may be in an inactive/idle state. An LCS external client 1k-20 may request an LCS service. The LCS external client 1k-20 may transmit an LCS request message to an AMF 1k-10 (operation 1k-40). In this case, the LCS external client 1k-20 may transmit recognition information on a specific UE or UE group. The AMF 1k-10 receiving the recognition information may identify information of a corresponding UE, may find an NG RAN node 1k-5 that is currently connected or camps, and then may transmit the LCS request message to the NG RAN node 1k-5 (operation 1k-45). When the AMF 1k-10 transmits the LCS request message to the RAN node 1k-5, an interface between the AMF 1k-10 and a CN LMF 1k-15 may be used. An LLMF may receive the LCS request message, and while directly transmitting and receiving a positioning-related message to and from the UE, the LLMF may perform a procedure related to the capability of the UE related to location information, a procedure related to configuration, measurement, and execution of a positioning method, and a procedure related to transmission and reception of obtained location information (operation 1k-25).

When the LLMF in FIG. 1K is used and there is an LPP operation of the UE and the CN LMF 1k-15 in FIG. 1j, the UE and the NG RAN node 1k-5 should distinguish whether an LPP is triggered by the CN LMF 1k-15 (operation 1j-3) or is an LPP through the LLMF (operation 1k-50) and package a corresponding PDU/message. Roughly, there may be two embodiments.

In a first embodiment, regarding an operation of the NG RAN node 1k-5, when an LPP message is from the CN-LMF 1k-15, a base station may add a received NAS message (including DL LPP) to a dedicatedNAS-Message IE of RRC (indicator for DL LPP message may be included), and may transmit the same to the UE through an RRC DLInformationTransfer message. When the LLMF directly receives an LCS request from the AMF 1k-10 as in FIG. 1K, the base station may add the LPP message to a message IE, separate from the NAS message, i.e., a localLMFLPP-Message IE of RRC (indicator for DL LPP message may be included), and may transmit the same to the UE 1k-1 through the RRC DLInformationTransfer message. Regarding an operation of the UE 1k-1, when an LPP message generated by the UE 1k-1 is a response message to the LPP message included in the dedicatedNAS-Message or is a message due to a procedure triggered by the LPP message included in the dedicatedNAS-Message, the UE 1k-1 may add the LPP message to a dedicated NAS-Message IE (indicator for UL LPP message may be included), and may transmit the same to the NR RAN node (i.e., a serving base station) through an RRC ULInformation Transfer message. When an LPP message generated by the UE 1k-1 is a response message to the LPP message included in the localLMFLPP-Message IE (indicator for UL LPP message may be included) or is a message due to a procedure triggered by the LPP message included in the localLMFLPP-Message IE, the UE 1k-1 may add the LPP message to a localLMFLPP-Message IE (indicator for UL LPP message may be included), and may transmit the same to the NR RAN node (i.e., a serving base station) through the RRC ULInformationTransfer message.

In another embodiment, regarding an operation of the NG RAN node 1k-5, when an LPP message is from the CN-LMF 1k-15, the base station may add a received NAS message (including DL LPP) to a dedicatedNAS-Message IE of RRC (indicator for DL LPP message may be included), and may transmit the same to the UE 1k-1 through an RRC DLInformationTransfer message. When the LLMF directly receives an LCS request from the AMF 1k-10 as in FIG. 1K, the base station may add the LPP message to the dedicatedNAS-Message IE (indicator for DL LPP message may be included), may mark or include a localLMFInd indicator, and may transmit the same to the UE 1k-1 through the RRC DLInformationTransfer message. Regarding an operation of the UE 1k-1, when an LPP message generated by the UE 1k-1 is a response message to the LPP message included in the dedicatedNAS-Message with no localLMFInd indicator or is a message due to a procedure triggered by the LPP message included in the dedicatedNAS-Message with no localLMFInd indicator, the UE may add the LPP message to the dedicatedNAS-Message IE (indicator for UL LPP message may be included), and may transmit the same to the NR RAN node (i.e., a serving base station) through an RRC ULInformationTransfer message. When an LPP message generated by the UE 1k-1 is a response message to the LPP message included in the dedicatedNAS-Message with the localLMFInd indicator or is a message due to a procedure triggered by the LPP message included in the dedicatedNAS-Message with the localLMFInd indicator, the UE 1k-1 may add the LPP message to the dedicatedNAS-Message IE (indicator for UL LPP message may be included), may mark or include the localLMFInd indicator, and may transmit the same to the NR RAN node (i.e., a serving base station) through the RRC ULInformationTransfer message.

Although a name of an RRC IE including an LPP message may be different, a dedicatedNAS-Message IE may be any IE that transmits a NAS message. Also, as for localLMFInd, an indicator indicating an LPP message corresponding to a local LMF may be any indicator regardless of its name. Also, as for a localLMFLPP-Message IE, an IE that may include an LPP message corresponding to a local LMF may be any IE having such a function regardless of its name.

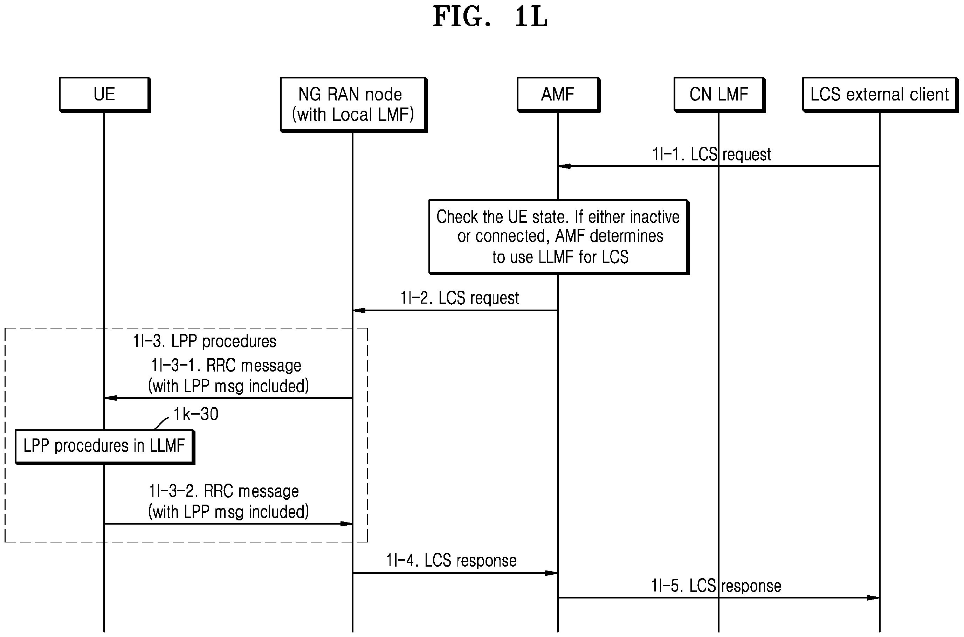

FIG. 1L is a flowchart illustrating a case where an AMF determines whether to use an LLMF or a CN LMF, according to some embodiments of the present disclosure. In an embodiment, when an LCS request is received, an AMF checks a state of a UE, determines whether to use a local LMF or a CN LMF, and transmits the LCS request to the determined LMF so that the LMF performs an LPP procedure with the UE. According to whether the determined LMF is the CN LMF or the LLMF, an LPP packaging operation between the UE and a serving NG RAN node may be performed according to the above two embodiments described with reference to FIG. 1K. There may be an LCS request from an external NG RAN node or from the AMF, and when the AMF receives the LCS request, the AMF checks a state of a UE that is an LCS target included in the LCS request. When the UE is connected or is inactive, the AMF determines that the LLMF is an LCS request target. When the AMF selects the LLMF as a request target, the AMF transmits the LCS request to the LLMF. When the LLMF receives the LCS request, the UE and the LLMF perform an LPP procedure according to a method of communication between the local LMF and the UE. In detail, as described with reference to embodiments of FIG. 1K, a method of adding an LPP message to a localLMFLPP-Message IE of an RRC message and a method of using a dedicatedNAS-Message IE and a localLMFInd indicator is used. When the LPP procedure ends, when the LLMF obtains desired location information of the UE, the NG RAN node transmits an LCS response to the AMF, and the AMF transmits the LCS response to an LCS external client.

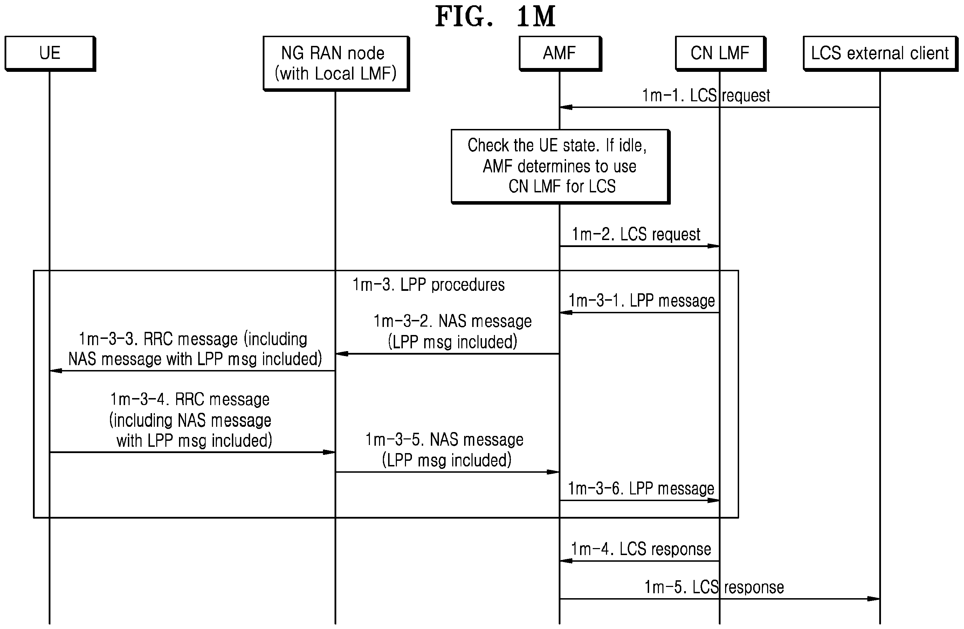

FIG. 1M is a diagram illustrating a case where an AMF determines whether to use an LLMF or a CN LMF, according to some embodiments of the present disclosure. In an embodiment, when an LCS request is received, an AMF checks a state of a UE, and when the UE is in an idle state, the AMF determines that a CN LMF is an LCS request target. When the AMF selects the CN LMF as a request target, the AMF transmits the LCS request to the CN LMF. When the CN LMF receives the LCS request, the CN LMF and the UE communicate with each other by encapsulating an LPP message in a NAS layer, as in operation 1j-3 of FIG. 1J. In detail, as described with reference to an embodiment of FIG. 1K, an NG RAN node and the UE adds an LPP message to a dedicatedNAS-Message IE of an RRC message and transmits the same. When the LPP procedure using the NAS layer ends and the CN LMF obtains desired location information of the UE, the CN LMF transmits an LCS response to the AMF, and the AMF transmits the LCS response to an LCS external client.

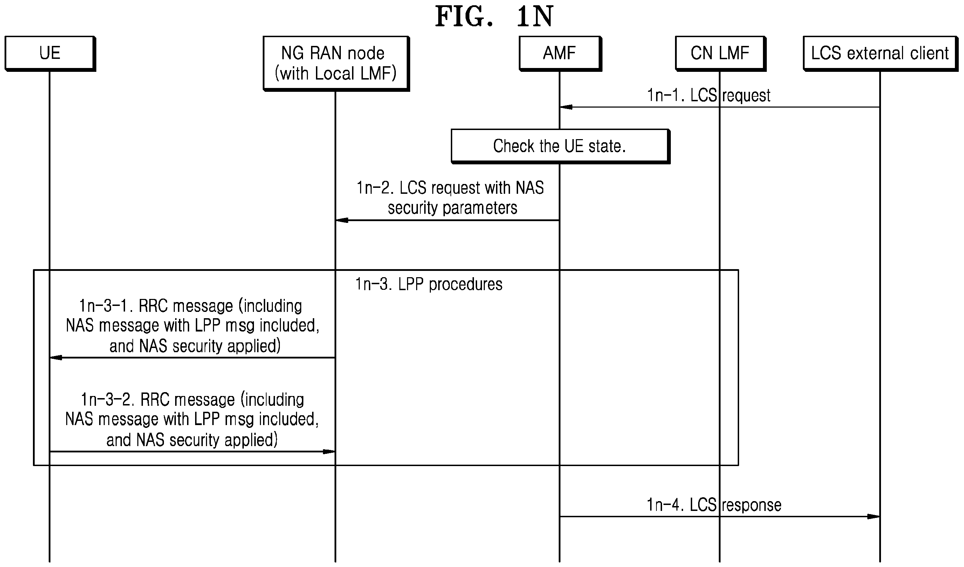

FIG. 1N is a flowchart illustrating a case where when an AMF receives an LCS request from an LCS external client, the AMF uses an LLMF regardless of a state of a UE, according to some embodiments of the present disclosure. When a UE is connected or inactive, the UE and a RAN node may communicate with each other without a NAS layer as in FIG. 1L. That is, in this case, an AS security through RRC may be applied. When the UE is in an idle state, because it takes time to re-establish the AS security, NAS security factors may be transmitted along with an LCS request to an LLMF. The UE and the RAN node may encapsulate an LPP message in a dedicatedNAS-Message IE by using the NAS security factors, and may communicate with each other by using NAS security in a NAS message.

In the present disclosure, a method of configuring factors required to add and modify a secondary cell (Scell) for a Scell group will be described.

According to a disclosed embodiment, in a wireless communication system, as the number of Scells to be operated increases, a data size required to signal factors required for Scell addition or modification may decrease.

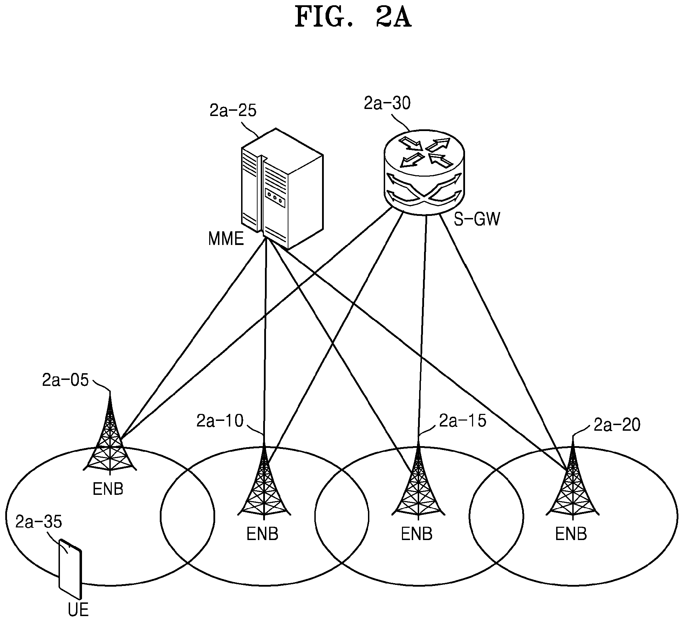

FIG. 2A is a diagram illustrating a structure of an LTE system, according to some embodiments of the present disclosure.

Referring to FIG. 2A, a radio access network of an LTE system may include next generation base stations (hereinafter, evolved node Bs (ENBs), node Bs, or base stations) 2a-05, 2a-10, 2a-15, and 2a-20, a mobility management entity (MME) 2a-25, and a serving-gateway (S-GW) 2a-30. A user terminal (hereinafter, a user equipment (UE) or a terminal) 2a-35 may access an external network via the ENBs 2a-05 through 2a-20 and the S-GW 2a-30.

In FIG. 2A, the ENBs 2a-05 through 2a-20 may correspond to existing node Bs of a universal mobile telecommunication system (UMTS). The ENBs may be connected to the UE 2a-35 via a wireless channel and may perform a more complicated function than the existing node Bs. In the LTE system, all user traffic including a real-time service such as a voice over Internet protocol (VoIP) may be serviced through a shared channel. Accordingly, an apparatus that collects state information such as a buffer state, an available transmission power state, a channel state, or the like of UEs, and schedules the state information may be required, and the ENBs 2a-05 through 2a-20 may perform this function. One ENB may typically control multiple cells. For example, to achieve a data rate of 100 Mbps, the LTE system may use orthogonal frequency division multiplexing (OFDM) as radio access technology (RAT) at a bandwidth of, for example, 20 MHz. Also, the ENB may use an adaptive modulation and coding (AMC) scheme that determines a modulation scheme and a channel coding rate according to a channel state of a terminal. The S-GW 2a-30 is a device that provides a data bearer, and may generate or remove a data bearer under the control by the MME 2a-25. The MME is a device that performs various control functions as well as a mobility management function for the terminal, and may be connected to a plurality of base stations.

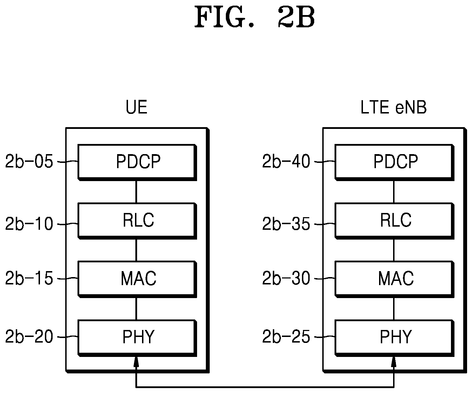

FIG. 2B is a diagram illustrating a radio protocol architecture of an LTE system, according to some embodiments of the present disclosure.

Referring to FIG. 2B, in each of a terminal and an ENB, a radio protocol of an LTE system may include a packet data convergence protocol (PDCP) 2b-05/2b-40, a radio link control (RLC) 2b-10/2b-35, and a medium access control (MAC) 2b-15/2b-30. A PDCP may be in charge of operations such as IP header compression/decompression. The main functions of the PDCP may be summarized as follows. However, the present disclosure is not limited to the following examples.
- Header compression and decompression: ROHC only
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

According to some embodiments, the RLC 2b-10 or 2b-35 may reconfigure a PDCP PDU in an appropriate size and perform an ARQ operation or the like.The main functions of an RLC may be summarized as follows. However, the present disclosure is not limited to the following examples.
- Transfer of upper layer PDUs
- ARQ (error correction through ARQ (only for AM data transfer))
- Concatenation, segmentation, and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

According to some embodiments, the MAC 2b-15 or 2b-30 is connected to several RLC entities configured in one terminal, and may multiplex RLC PDUs to MAC PDUs and demultiplex RLC PDUs from MAC PDUs. The main functions of a MAC may be summarized as follows. However, the present disclosure is not limited to the following examples.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- HARQ (error correction through HARQ)
- Priority handling between logical channels of one UE
- Priority handling between UEs by means of dynamic scheduling
- MBMS service identification
- Transport format selection
- Padding

According to some embodiments, a physical layer (PHY) 2b-20 or 2b-25 may channel-code and modulate higher layer data into OFDM symbols and transmit the OFDM symbols via a wireless channel, or may demodulate and channel-decode OFDM symbols received via a wireless channel and transfer the channel-decoded OFDM symbols to a higher layer.

However, the present disclosure is not limited to the following examples.

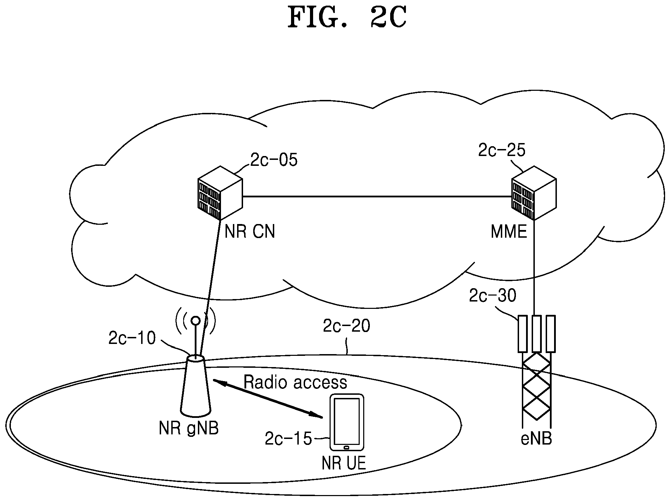

FIG. 2C is a diagram illustrating a structure of a next generation mobile communication system, according to some embodiments of the present disclosure.

Referring to FIG. 2C, a radio access network of a next generation mobile communication system (hereinafter, NR or 5G) may include a next generation base station (hereinafter, a new radio node B (NR gNB) or an NR base station) 2c-10 and a new radio core network (NR CN) 2c-05. A new radio user equipment (NR UE) 2c-15 may access an external network via the NR gNB 2c-10 and the NR CN 2c-05.

In FIG. 2C, the NR gNB 2c-10 may correspond to an evolved node B (eNB) of an existing LTE system. The NR gNB is connected to the NR UE 2c-15 via a wireless channel and may provide far better services than an existing node B. In the next generation mobile communication system, all user traffic may be serviced through a shared channel. Accordingly, an apparatus that collects state information such as a buffer state, an available transmission power state, a channel state, or the like of UEs, and schedules the state information may be required, and the NR gNB 2c-10 may perform this function. One NR gNB may control multiple cells. In the next generation mobile communication system, to achieve high-speed data transmission compared to the current LTE, a greater bandwidth than the current maximum bandwidth may be applied. Also, beamforming technology may be additionally used with OFDM as RAT.

Also, according to some embodiments, the NR gNB may use an AMC scheme that determines a modulation scheme and a channel coding rate according to a channel state of a terminal. The NR CN 2c-05 may perform functions such as mobility support, bearer configuration, and QoS configuration. The NR CN 2c-05 is a device that performs various control functions as well as a mobility management function for the terminal, and may be connected to a plurality of base stations. Also, the next generation mobile communication system may interoperate with the existing LTE system, and the NR CN may be connected to an MME 2c-25 via a network interface. The MME may be connected to an eNB 2c-30 that is an existing base station.

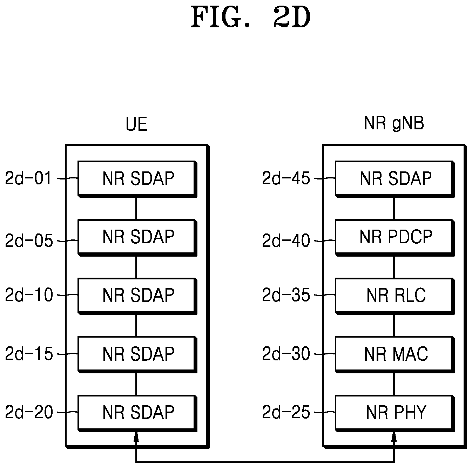

FIG. 2D is a diagram illustrating a radio protocol architecture of a next generation mobile communication system, according to some embodiments of the present disclosure.

Referring to FIG. 2D, in each of a terminal and an NR base station, a radio protocol of a next generation mobile communication system may include an NR service data adaptation protocol (SOAP) 2d-01/2d-45, an NR PDCP 2d-05/2d-40, an NR RLC 2d-10/2d-35, and an NR MAC 2d-15/2d-30.

According to some embodiments, the main functions of the NR SDAP 2d-01 or 2d-45 may include some of the following functions. However, the present disclosure is not limited to the following examples.
- Transfer of user plane data
- Mapping between a QoS flow and a DRB for both DL and UL
- Marking QoS flow ID in both DL and UL packets
- Reflective QoS flow to DRB mapping for the UL SOAP PDUs

With respect to an SOAP entity, a terminal may be configured, through a radio resource control (RRC) message, as to whether to use a header of the SOAP entity or a function of the SOAP entity for each PDCP layer, bearer, or logical channel. Also, when an SOAP header is configured, a 1-bit NAS reflective QoS configuration indicator and a 1-bit AS reflective QoS configuration indicator may indicate the terminal of the SOAP header to update or reconfigure mapping information between a QoS flow and a data bearer for an UL and a DL. According to some embodiments, the SOAP header may include QoS flow ID information indicating QoS. According to some embodiments, QoS information may be used as data processing priority and scheduling information for supporting smooth services.

According to some embodiments, the main functions of the NR PDCP 2d-05 or 2d-40 may include some of the following functions. However, the present disclosure is not limited to the following examples.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above description, a reordering function of an NR PDCP entity may indicate a function of reordering PDCP PDUs received from a lower layer based on PDCP sequence numbers (SNs). The reordering function of the NR PDCP entity may include a function of delivering data to a higher layer in a reordered order, a function of directly delivering data without considering the order, a function of reordering the order and recording lost PDCP PDUs, a function of reporting a state of the lost PDCP PDUs to a transmission side, and requesting retransmission of the lost PDCP PDUs.

According to some embodiments, the main functions of the NR RLC 2d-10 or 2d-35 may include some of the following functions. However, the present disclosure is not limited to the following examples.
- Transfer of upper layer PDUs
- In-sequence delivery of upper layer PDUs
- Out-of-sequence delivery of upper layer PDUs
- ARQ (error correction through ARQ)
- Concatenation, segmentation, and reassembly of RLC SDUs
- Re-segmentation of RLC data PDUs
- Reordering of RLC data PDUs
- Duplicate detection
- Protocol error detection
- RLC SDU discard
- RLC re-establishment

In the above description, an in-sequence delivery function of an NR RLC entity may indicate a function of in-sequence delivering RLC SDUs received from a lower layer to a higher layer. When one original RLC SDU is segmented into multiple RLC SDUs and received, the in-sequence delivery function of the NR RLC entity may include a function of reassembling the RLC SDUs and delivering the RLC SDUs.

The in-sequence delivery function of the NR RLC entity may include a function of reordering the received RLC PDUs based on RLC SNs or PDCP SNs. Also, the in-sequence delivery function of the NR RLC entity may include a function of reordering the order and recording lost PDCP PDUs, a function of reporting a state of the lost PDCP PDUs to a transmission side, and a function of requesting retransmission of the lost PDCP PDUs.

When there are the lost RLC SDUs, the in-sequence delivery function of the NR RLC entity may include a function of in-sequence delivering only RLC SDUs before the lost RLC SDUs to a higher layer.

Also, when a certain timer expires although there are the lost RLC SDUs, the in-sequence delivery function of the NR RLC entity may include a function of in-sequence delivering all RLC SDUs received before the certain timer starts to a higher layer.

When a certain timer expires although there are the lost RLC SDUs, the in-sequence delivery function of the NR RLC entity may include a function of in-sequence delivering all RLC SDUs received up to now to a higher layer.

The NR RLC entity may process RLC PDUs in an order of reception regardless of an order of SNs and may deliver the processed RLC PDUs to an NR PDCP entity in an out-of sequence delivery manner.

When the NR RLC entity receives segments, the NR RLC entity may receive segments that are stored in a buffer or to be received later, may reconfigure the segments into one complete RLC PDU, and then may deliver the RLC PDU to the NR PDCP entity.

The NR RLC entity may not include a concatenation function, and the function may be performed by an NR MAC layer or may be replaced by a multiplexing function of the NR MAC entity.

In the above description, an out-of-sequence delivery function of the NR RLC entity may indicate a function of delivering RLC SDUs received from a lower layer directly to a higher layer regardless of an order. When one original RLC SDU is segmented into multiple RLC SDUs and received, the out-of-sequence delivery function of the NR RLC entity may include a function of reassembling the RLC SDUs and delivering the RLC SDUs. The out-of-sequence delivery function of the NR RLC entity may include a function of storing and ordering RLC SNs or PDCP SNs of the received RLC PDUs and recording lost RLC PDUs.

According to some embodiments, the NR MAC 2d-15 or 2d-30 may be connected to several NR RLC entities configured in one terminal, and the main functions of the NR MAC may include some of the following functions. However, the present disclosure is not limited to the following examples.
- Mapping between logical channels and transport channels
- Multiplexing/demultiplexing of MAC SDUs
- Scheduling information reporting
- HARQ (error correction through HARQ)
- Priority handling between logical channels of one UE
- Priority handling between UEs by means of dynamic scheduling
- MBMS service identification
- Transport format selection
- Padding

An NR PHY 2d-20 or 2d-25 may channel-code and modulate higher layer data into OFDM symbols and transmit the OFDM symbols via a wireless channel, or may demodulate OFDM symbols received via a wireless channel, channel-decode the demodulated OFDM symbols, and transfer the channel-decoded OFDM symbols to a higher layer.

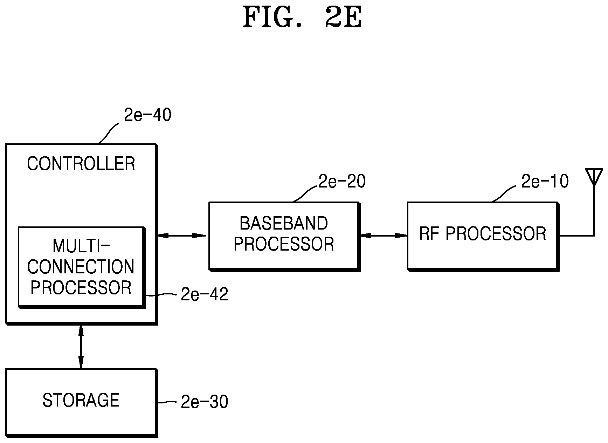

FIG. 2E is a block diagram illustrating an internal structure of a terminal, according to some embodiments of the present disclosure.

Referring to FIG. 2E, a terminal may include a radio frequency (RF) processor 2e-10, a baseband processor 2e-20, a storage 2e-30, and a controller 2e-40. However, the present disclosure is not limited thereto, and the terminal may include more or fewer elements than those illustrated in FIG. 2E.

The RF processor 2e-10 may perform a function of transmitting and receiving a signal via a wireless channel, such as signal band conversion or amplification. That is, the RF processor 2e-10 may up-convert a baseband signal received from the baseband processor 2e-20 into an RF band signal and transmit the same via an antenna, and may down-convert an RF band signal received via an antenna into a baseband signal. For example, the RF processor 2e-10 may include a transmission filter, a reception filter, an amplifier, a mixer, an oscillator, a digital-to-analog convertor (DAC), an analog-to-digital convertor (ADC), or the like. However, the present disclosure is not limited thereto. Although only one antenna is illustrated in FIG. 2E, the terminal may include a plurality of antennas. Also, the RF processor 2e-10 may include a plurality of RF chains. Furthermore, the RF processor 2e-10 may perform beamforming. For beamforming, the RF processor 2e-10 may adjust a phase and magnitude of each of signals transmitted and received via a plurality of antennas or antenna elements. Also, the RF processor 2e-10 may perform multiple-input multiple-output (MIMO), and may receive several layers during a MIMO operation.

The baseband processor 2e-20 performs a conversion function between a baseband signal and a bit string according to the physical layer specifications of a system. For example, during data transmission, the baseband processor 2e-20 may generate complex symbols by encoding and modulating a transmitted bit string. Also, during data reception, the baseband processor 2e-20 may restore a received bit string by demodulating and decoding a baseband signal received from the RF processor 2e-10. For example, according to an OFDM scheme, during data transmission, the baseband processor 2e-20 may generate complex symbols by encoding and modulating a transmitted bit string, map the complex symbols to subcarriers, and then configure OFDM symbols through an inverse fast Fourier transform (IFFT) operation and cyclic prefix (CP) insertion. Also, during data reception, the baseband processor 2e-20 may divide a baseband signal received from the RF processor 2e-10 into units of OFDM symbols, restore signals mapped to subcarriers, through a fast Fourier transform (FFT) operation, and then restore a received bit string through demodulation and decoding.

The baseband processor 2e-20 and the RF processor 2e-10 transmit and receive a signal as described above. Accordingly, the baseband processor 2e-20 and the RF processor 2e-10 may each be referred to as a transmitter, a receiver, a transceiver, or a communicator. Furthermore, at least one of the baseband processor 2e-20 or the RF processor 2e-10 may include a plurality of communication modules to support different multiple RATs. In addition, at least one of the baseband processor 2e-20 or the RF processor 2e-10 may include different communication modules to process signals of different frequency bands. For example, the different RATs may include a wireless LAN (e.g., IEEE 802.11) and a cellular network (e.g., LTE). Also, the different frequency bands may include a super high frequency (SHF) band (e.g., 2. NRHz, NRhz) and a millimeter (mm) wave (e.g., 60 GHz) band. The terminal may transmit and receive a signal to and from a base station by using the baseband processor 2e-20 and the RF processor 2e-10, and the signal may include control information and data.

The storage 2e-30 stores data such as a basic program for an operation of the terminal, an application program, or configuration information. In particular, the storage 2e-30 may store information related to a second access node performing wireless communication by using second RAT. Also, the storage 2e-30 provides stored data according to a request from the controller 2e-40. The storage 2e-30 may include a storage medium such as a ROM, a RAM, a hard disk, a CD-ROM, or a DVD, or a combination thereof. Also, the storage 2e-30 may include a plurality of memories.

The controller 2e-40 controls overall operations of the terminal. For example, the controller 2e-40 transmits and receives a signal via the baseband processor 2e-20 and the RF processor 2e-10. Also, the controller 2e-40 records and reads data to and from the storage 2e-30. To this end, the controller 2e-40 may include at least one processor. For example, the controller 2e-40 may include a communication processor (CP) for performing control for communication and an application processor (AP) for controlling a higher layer such as an application program. Also, at least one element in the terminal may be implemented as one chip.

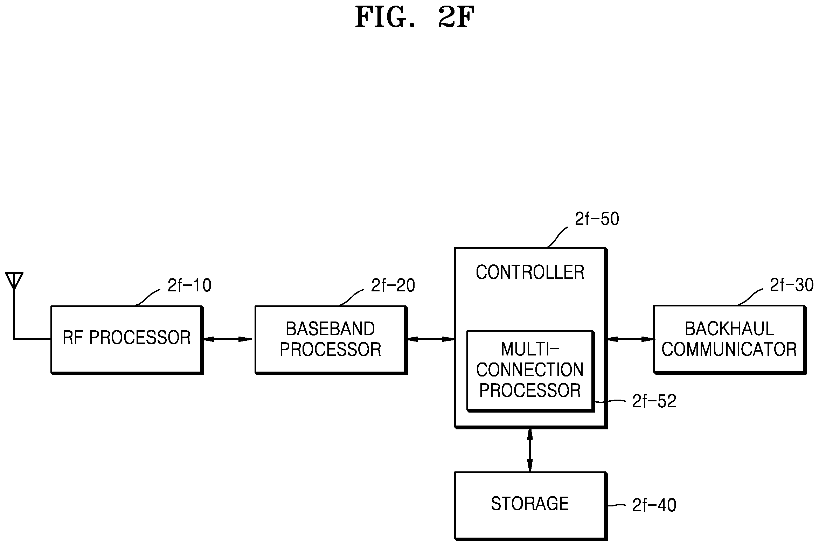

FIG. 2F is a block diagram illustrating a configuration of an NR base station, according to some embodiments of the present disclosure.

Referring to FIG. 2F, a base station may include an RF processor 2f-10, a baseband processor 2f-20, a backhaul communicator 2f-30, a storage 2f-40, and a controller 2f-50. However, the present disclosure is not limited thereto, and the base station may include more or fewer elements than those illustrated in FIG. 2F.

The RF processor 2f-10 may perform a function of transmitting and receiving a signal via a wireless channel, such as signal band conversion or amplification. That is, the RF processor 2f-10 may up-convert a baseband signal received from the baseband processor 2f-20 into an RF band signal and transmit the same via an antenna, and may down-convert an RF band signal received via an antenna into a baseband signal. For example, the RF processor 2f-10 may include a transmission filter, a reception filter, an amplifier, a mixer, an oscillator, a DAC, an ADC, or the like. Although only one antenna is illustrated in FIG. 2F, the RF processor 2f-10 may include a plurality of antennas. Also, the RF processor 2f-10 may include a plurality of RF chains. Also, the RF processor 2f-10 may perform beamforming. For beamforming, the RF processor 2f-10 may adjust a phase and magnitude of each of signals transmitted and received via a plurality of antennas or antenna elements. The RF processor may perform a downlink MIMO operation by transmitting at least one layer.

The baseband processor 2f-20 performs a conversion function between a baseband signal and a bit string according to the physical layer specifications of first RAT. For example, during data transmission, the baseband processor 2f-20 may generate complex symbols by encoding and modulating a transmitted bit string. Also, during data reception, the baseband processor 2f-20 may restore a received bit string by demodulating and decoding a baseband signal received from the RF processor 2f-10. For example, according to an OFDM scheme, during data transmission, the baseband processor 2f-20 may generate complex symbols by encoding and modulating a transmitted bit string, map the complex symbols to subcarriers, and then configure OFDM symbols through an IFFT operation and CP insertion. Also, during data reception, the baseband processor 2f-20 may divide a baseband signal received from the RF processor 2f-10 into units of OFDM symbols, restore signals mapped to subcarriers through an FFT operation, and then restore a received bit string through demodulation and decoding. The baseband processor 2f-20 and the RF processor 2f-10 transmit and receive a signal as described above. Accordingly, the baseband processor 2f-20 and the RF processor 2f-10 may each be referred to as a transmitter, a receiver, a transceiver, a communicator, or a wireless communicator. The base station may transmit and receive a signal to and from a terminal by using the baseband processor 2f-20 and the RF processor 2f-10, and the signal may include control information and data.

The backhaul communicator 2f-30 provides an interface for performing communication with other nodes in a network. That is, the backhaul communicator 2f-30 may convert a bit string transmitted from a main base station to another node such as a sub-base station or a core network into a physical signal, and may convert a physical signal received from the other node into a bit string. The backhaul communicator 2f-30 may be included in a communicator.

The storage 2f-40 stores data such as a basic program for an operation of the base station, an application program, or configuration information. The storage 2f-40 may store information on a bearer allocated to a connected terminal and a measurement result reported from the connected terminal. Also, the storage 2f-40 may store information that becomes a basis of determination whether to provide or suspend multi-connections to the terminal. Also, the storage 2f-40 provides stored data according to a request from the controller 2f-50. The storage 2f-40 may include a storage medium such as a ROM, a RAM, a hard disk, a CD-ROM, or a DVD, or a combination thereof. Also, the storage 2f-40 may include a plurality of memories. According to some embodiments, the storage 2f-40 may store a program for executing a buffer state reporting method according to the present disclosure.

The controller 2f-50 controls overall operations of the base station. For example, the controller 2f-50 transmits and receives a signal via the baseband processor 2f-20 and the RF processor 2f-10 or via the backhaul communicator 2f-30. Also, the controller 2f-50 records and reads data to and from the storage 2f-40. To this end, the controller 2f-50 may include at least one processor. Also, at least one element of the base station may be implemented as one chip.

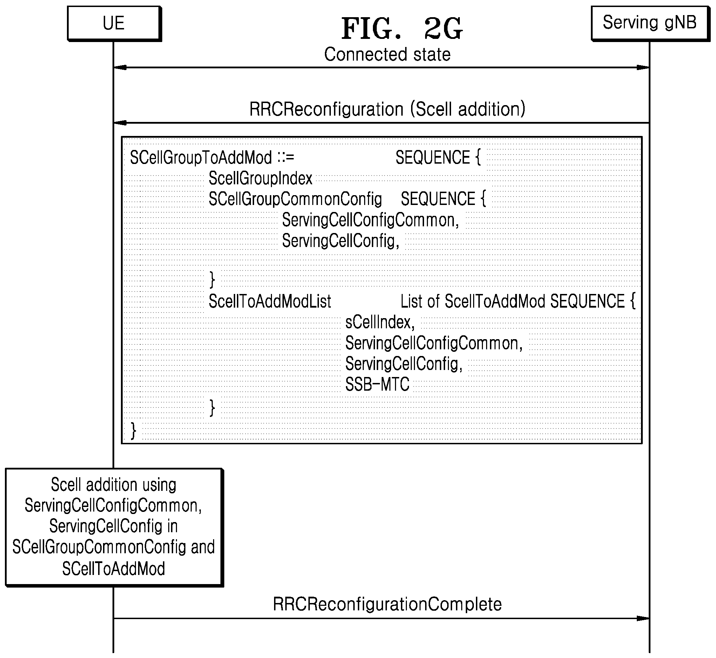

FIG. 2G is a signal flowchart during Scell addition or modification, in carrier aggregation, according to some embodiments of the present disclosure. A UE and a base station are connected to each other. When the base station is to command the UE to add or modify a Scell, the base station may transmit the following information to the UE through an RRCReconfiguration message.

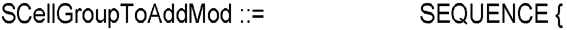

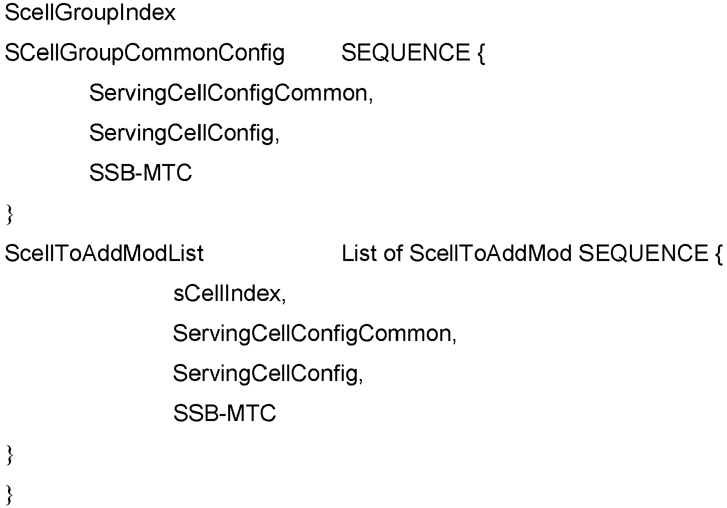

SCellGroupToAddMod may be a field or information element (IE) including information transmitted by the base station to add or modify a Scell. The IE may include one ScellGrouplndex, and ScellGrouplndex may be an index indicating a group to which a Scell to be added or modified belongs. ScellGroup may have SCellGroupCommonConfig that is a parameter set to be referenced during configuration of the Scell to be added or modified. The SCellGroupCommonConfig may include information such as ServingCellConfigCommon, ServingCellConfig, and SSB-MTC. The ServingCellConfigCommon may be a collection of cell specific factors of the Scell to be added or modified, and the ServingCellConfig may be a collection of UE dedicated factors of the Scell to be added or modified. The SSB-MTC is measurement timing configuration information of a synchronization signal block (SSB). In addition, ScellToAddModlist may be a list of Scells to be added or modified. ScellToAddMod may be an element of the list. The ScellToAddMod may include sCelllndex indicating an index of a Scell to be added or modified, and may include information such as ServingCellConfigCommon, ServingCellConfig, or SSB-MTC as a unit including configuration factors to be referenced for each Scell. Like a signal of a Scell group, the ServingCellConfigCommon includes cell specific common factors, the ServingCellConfig includes UE dedicated factors, and the SSB-MTC is SSB measurement timing configuration information. When the UE receives the RRCReconfiguration message including the above information, the UE adds or modifies a Scell according to configuration rules and may notify confirmation to the base station through an RRCReconfigurationComplete message.

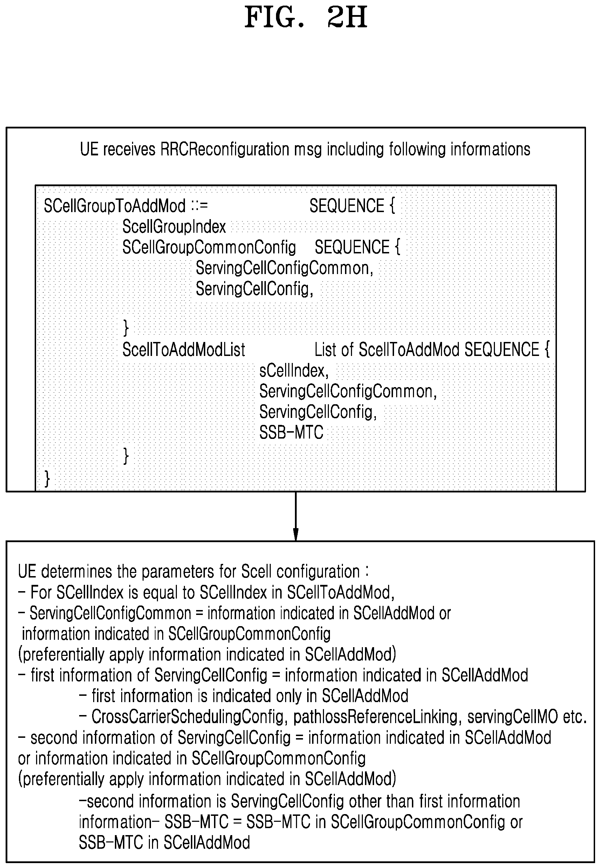

FIG. 2H is a flowchart illustrating an operation of a UE during Scell addition/modification, according to some embodiments of the present disclosure. When a UE receives a Scell addition or modification message transmitted through an RRCReconfiguration message in FIG. 2G and sCelllndex of ScellToAddMod in ScellToAddModList is not an index of a Scell that is currently added, the UE may newly add a Scell. In this case, for a factor of ServingCellConfigCommon to be applied to a Scell corresponding to the sCelllndex in the ScellToAddModList, the UE may apply ServingCellConfigCommon indicated in SCellToAddMod or ServingCellConfigCommon indicated in SCellGroupCommonConfig. In an embodiment, for the factor of the ServingCellConfigCommon, the UE may preferentially apply information indicated in the SCellToAddMod, and regarding information not indicated in the SCellToAddMod, may apply information indicated in the SCellGroupCommonConfig. When an index of a Scell is not added and a value which the UE has is used, the UE may modify configuration factors of an existing Scell. In an embodiment, the UE may replace an existing configuration factor by using the ServingCellConfigCommon indicated in the ScellToAddMod, and, for configuration factors other than the ServingCellConfigCommon indicated in the ScellToAddMod, may replace existing configuration factors by using the ServingCellConfigCommon indicated in the SCellGroupCommonConfig. For configuration factors other than the ServingCellConfigCommon indicated in the ScellToAddMod or the ScellGroupCommonConfig, the UE may use previous configuration factors of the Scell.

Also, ServingCellConfig factors to be applied to the Scell corresponding to the sCelllndex in the ScellToAddModList according to an embodiment may be divided into two types of information. First information of ServingCellConfig is information indicated in the SCellToAddMod and has the following characteristics. The first information may be indicated only in the SCellAddMod. In an embodiment, the first information may be CrossCarrierSchedulingConfig, pathlossReferenceLinking, or servingCellMO. Second information of the ServingCellConfig may be second information of the ServingCellConfig indicated in the SCellToAddMod, or second information of ServingCellConfig indicated in the SCellGroupCommonConfig. In an embodiment, for the second information of the ServingCellConfig, the UE may preferentially apply the second information of the ServingCellConfig indicated in the SCellToAddMod, and regarding a factor that is not indicated, may apply the second information of the ServingCellConfig indicated in the SCellGroupCommonConfig. The second information may have the following conditions. The second information may be ServingCellConfig other than the first information.

Also, for SSB-MTC to be applied to the Scell corresponding to the sCelllndex in the ScellToAddModList, SSB-MTC existing in the SCellGroupCommonConfig or SSB-MTC existing in the SCellToAddMod may be used. In an embodiment, for SSB-MTC of a Scell to be added or modified, the UE may preferentially use the SSB-MTC existing in the SCellToAddMod, and regarding a lower field that is not indicated, may use the SSB-MTC existing in the SCellGroupCommonConfig.

When the sCelllndex is an index of a Scell that is previously configured, in the case of factors existing in the ScellToAddMod received for respective fields of the Scell, an existing value of each factor may be overwritten with a value existing in the received ScellToAddMod. Factors other than the factors existing in the received ScellToAddMod may maintain their previous values.

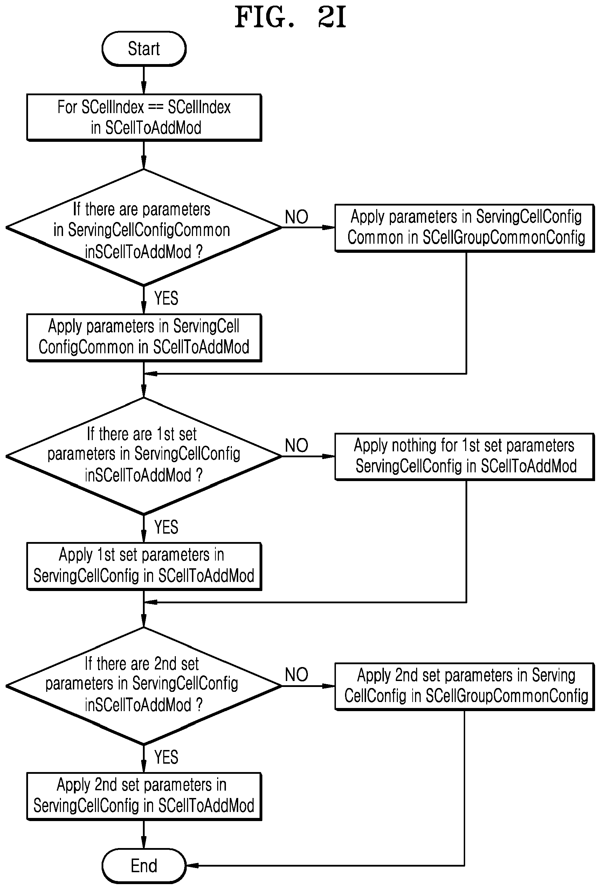

FIG. 2I is a detailed flowchart illustrating an operation of a terminal during Scell addition/modification, according to some embodiments of the present disclosure. When a terminal receives a Scell addition or modification message transmitted through an RRCReconfiguration message and sCelllndex of ScellToAddMod in ScellToAddModList is not an index of a Scell that is currently added, the terminal may newly add a Scell. In this case, for a factor of ServingCellConfigCommon to be applied to a Scell corresponding to the sCelllndex in the ScellToAddModList, the terminal may apply ServingCellConfigCommon indicated in SCellToAddMod or ServingCellConfigCommon indicated in SCellGroupCommonConfig. In an embodiment, the terminal may preferentially apply information indicated in the SCellToAddMod, and regarding information that is not indicated in the SCellToAddMod, may apply information indicated in the SCellGroupCommonConfig.

Also, ServingCellConfig factors to be applied to the Scell corresponding to the sCelllndex in the ScellToAddModList may be divided into two types of information, in an embodiment. First information of ServingCellConfig is information indicated in the SCellToAddMod and may have the following characteristics. The first information may be indicated only in the SCellAddMod. According to an embodiment, the first information may be CrossCarrierSchedulingConfig, pathlossReferenceLinking, or servingCellMO. Second information of the ServingCellConfig may be second information of the ServingCellConfig indicated in the SCellToAddMod or second information of ServingCellConfig indicated in the SCellGroupCommonConfig. In an embodiment, for the second information of the ServingCellConfig, the terminal may preferentially apply the second information of the ServingCellConfig indicated in the SCellToAddMod, and regarding a factor that is not indicated, may apply the second information of the ServingCellConfig indicated in the SCellGroupCommonConfig. The second information may have the following conditions. The second information may be ServingCellConfig other than the first information.

Also, for SSB-MTC to be applied to the Scell corresponding to the sCelllndex in the ScellToAddModList, the terminal may use SSB-MTC existing in the SCellGroupCommonConfig or SSB-MTC existing in the SCellToAddMod. In an embodiment, for SSB-MTC of a Scell to be added or modified, the terminal may preferentially use the SSB-MTC existing in the SCellToAddMod, and regarding a lower field that is not indicated, may use the SSB-MTC existing in the SCellGroupCommonConfig.

Methods according to the claims of the present disclosure or the embodiments described in the specification may be implemented in hardware, software, or a combination of hardware and software.

When implemented in software, a computer-readable storage medium storing one or more programs (software modules) may be provided. The one or more programs stored in the computer-readable storage medium are configured to be executed by one or more processors in an electronic device. The one or more programs may include instructions for allowing the electronic device to execute the methods according to the claims of the present disclosure or the embodiments described in the specification.

These programs (software modules or software) may be stored in a random-access memory (RAM), a non-volatile memory including a flash memory, a read-only memory (ROM), an electrically erasable programmable read-only memory (EEPROM), a magnetic disc storage device, a compact disc (CD)-ROM, a digital versatile disc (DVD), another optical storage device, or a magnetic cassette. Alternatively, the programs may be stored in a memory configured by combining some or all of them. Also, each constituent memory may include a plurality of memories.

Also, the programs may be stored in an attachable storage device that is accessible through a communication network, such as the Internet, an intranet, a local area network (LAN), a wide LAN (WLAN), or a storage area network (SAN), or a combination thereof. Such a storage device may connect to a device according to embodiments of the present disclosure through an external port. Also, a separate storage device on a communication network may connect to a device according to embodiments of the present disclosure.

In the afore-described embodiments of the present disclosure, elements included in the present disclosure are expressed in a singular or plural form according to the embodiments of the present disclosure. However, singular or plural expressions have been selected properly for a condition provided for convenience of description, and the present disclosure is not limited to singular or plural components. Components expressed as plural may be configured as a single component, or a component expressed as singular may be configured as plural components.

## Claims

1. A method of providing a location-based service, the method comprising:
identifying, by an access management function, AMF, a terminal (1c-15) of which a location is to be determined and a base station (1c-10) currently serving the terminal;
checking, by the AMF, a state of the terminal (1c-15);
determining (11-1), by the AMF, based on the state of the terminal, whether to use a local location management function, LLMF or a core network LMF, CN LMF;
in case that the terminal is in connected or inactive state:
transmitting (1l-2), by the AMF, request information for a location to the LLMF, having a logical connection inside the base station;
generating, by the base station (1c-10), LTE positioning protocol, LPP, protocol information based on the request information;
transmitting (11-3-1), by the base station (1c-10), a first RRC message to the terminal (Ic-15) comprising the LPP protocol information:
receiving (11-3-2), by the base station (Ic-10), a response message comprising location-related information of the terminal, based on the first RRC message;
transmitting (11-4), by the base station (1c-10), the response message to the AMF, and
in case that the terminal is in idle state:
transmitting (1m-2), by the AMF, a location service, LCS, request to the CN LMF; transmitting (1m-3-1) to the AMF, by the CN LMF, an LPP message targeted for the terminal; receiving (lm-3-2), by the base station (1c-10), from the AMF, a first non-access stratum, NAS, message including the LPP message;
transmitting (Im-3-3), by the base station (Ic-10), to the terminal, a second RRC message including the first NAS message;
receiving (1m-3-4), by the base station (1c-10), from the terminal, an LPP response message in a second NAS message included in a third RRC message;
transmitting (1m-3-5), by the base station (1c-10), to the AMF, the second NAS message with the LPP response message,
receiving (1m-3-6), by the CN LMF from the AMF, the LPP response message; and
generating and sending (1m-4) to the AMF, by the CN LMF, an LCS response based on the LPP response message;
wherein the request information includes information for recognizing the terminal.

2. The method of claim 1, wherein the request information comprises identification information on the terminal (Ic-15), or information on the base station (Ic-10) to which the terminal connects.

3. The method of claim 1, wherein the first RRC message comprises an indicator corresponding to the local LMF, or comprises the protocol information in an information element, IE, corresponding to the local LMF.

4. A system for providing a location-based service, the system comprising:
an access management function, AMF,
a base station (Ic-10), and
a core network location management function,
CN LMF;
the AMF, the base station and the CN LMF being configured to perform the method of claim 1.

5. The system of claim 4, wherein the request information comprises identification information on the terminal (lc-15), or information on the base station to which the terminal connects.

6. The system of claim 4, wherein the first RRC message comprises an indicator corresponding to the local LMF, or comprises the protocol information in an information element, IE, corresponding to the local LMF.

## Patentansprüche

1. Verfahren zur Bereitstellung eines standortbezogenen Dienstes, wobei das Verfahren umfasst:
Identifizieren eines Endgeräts (1c-15), dessen Standort bestimmt werden soll, und einer Basisstation (1c-10), die das Endgerät gegenwärtig bedient, durch eine Zugangsverwaltungsfunktion, AMF,
Überprüfen eines Zustands des Endgeräts durch die AMF (1c-15),
Bestimmen (11-1), durch die AMF auf der Grundlage des Zustands des Endgeräts, ob eine lokale Standortverwaltungsfunktion, LLMF, oder eine Kernnetz-LMF, CN LMF, zu verwenden ist,
für den Fall, dass sich das Endgerät im verbundenen oder inaktiven Zustand befindet:
Übertragen (11-2) von Anforderungsinformationen für einen Standort durch die AMF an die LLMF, die eine logische Verbindung innerhalb der Basisstation hat;
Erzeugen, durch die Basisstation (1c-10), von LTE-Positionierungsprotokoll-, LPP,-Protokollinformationen basierend auf den Anforderungsinformationen;
Übertragen (11-3-1) einer ersten RRC-Nachricht an das Endgerät (1c-15), die die LPP-Protokollinformationen enthält, durch die Basisstation (1c-10);
Empfangen (11-3-2), durch die Basisstation (1c-10), einer Antwortnachricht, die standortbezogene Informationen des Endgeräts enthält, basierend auf der ersten RRC-Nachricht,
Übertragen (11-4) der Antwortnachricht an die AMF durch die Basisstation (1c-10), und
wenn sich das Endgerät im Ruhezustand befindet:
Übertragen (1m-2), durch die AMF, einer Standortdienst-, LCS,-Anforderung an die CN LMF,
Übertragen (1m-3-1) einer für das Endgerät bestimmten LPP-Nachricht an die AMF durch die CN LMF;
Empfangen (1m-3-2) einer ersten Non-Access-Stratum-, NAS,-Nachricht, die die LPP-Nachricht enthält, durch die Basisstation (1c-10) von der AMF,
Übertragen (1m-3-3) einer zweiten RRC-Nachricht, die die erste NAS-Nachricht enthält, durch die Basisstation (1c-10) an das Endgerät;
Empfangen (1m-3-4) einer LPP-Antwortnachricht in einer zweiten NAS-Nachricht, die in einer dritten RRC-Nachricht enthalten ist, durch die Basisstation (1c-10) von dem Endgerät;
Übertragen (1m-3-5) der zweiten NAS-Nachricht mit der LPP-Antwortnachricht durch die Basisstation (1c-10) an die AMF,
Empfangen (1m-3-6) der LPP-Antwortnachricht durch die CN LMF von der AMF, und
Erzeugen und Senden (1m-4) einer LCS-Antwort basierend auf der LPP-Antwortnachricht durch die CN LMF an die AMF;
wobei die Anforderungsinformationen Informationen zur Erkennung des Endgeräts enthalten.

2. Verfahren nach Anspruch 1, wobei die Anforderungsinformationen Identifikationsinformationen über das Endgerät (1c-15) oder Informationen über die Basisstation (1c-10), mit der das Endgerät verbunden ist, umfassen.

3. Verfahren nach Anspruch 1, wobei die erste RRC-Nachricht einen Indikator umfasst, der der lokalen LMF entspricht, oder die Protokollinformationen in einem Informationselement, IE, umfasst, das der lokalen LMF entspricht.

4. System zur Bereitstellung eines standortbezogenen Dienstes, wobei das System Folgendes umfasst:
eine Zugangsverwaltungsfunktion, AMF,
eine Basisstation (1c-10) und eine Kernnetz-Standortverwaltungsfunktion, CN LMF,
wobei die AMF, die Basisstation und die CN LMF konfiguriert sind, um das Verfahren nach Anspruch 1 durchzuführen.

5. System nach Anspruch 4, wobei die Anforderungsinformationen Identifikationsinformationen über das Endgerät (1c-15) oder Informationen über die Basisstation, mit der das Endgerät verbunden ist, umfassen.

6. System nach Anspruch 4, wobei die erste RRC-Nachricht einen Indikator umfasst, der der lokalen LMF entspricht, oder die Protokollinformationen in einem Informationselement, IE, umfasst, das der lokalen LMF entspricht.

## Revendications

1. Procédé pour fournir un service basé sur la localisation, le procédé comprenant :
identifier, par une fonction de gestion d'accès, AMF, un terminal (1c-15) dont la localisation doit être déterminée et une station de base (1c-10) desservant actuellement le terminal ;
vérifier, par l'AMF, un état du terminal (1c-15) ;
déterminer (11-1), par l'AMF, en fonction de l'état du terminal, s'il convient d'utiliser une fonction de gestion de localisation locale, LLMF, ou une LMF de réseau central, LMF CN ;
dans le cas où le terminal est en état connecté ou inactif :
transmettre (11-2), par l'AMF, des informations de demande de localisation à la LLMF ayant une connexion logique à l'intérieur de la station de base ;
générer, par la station de base (1c-10), des informations de protocole de positionnement LTE, LPP, sur la base des informations de demande ;
transmettre (11-3-1), par la station de base (1c-10), un premier message RRC au terminal (1c-15) comprenant les informations de protocole LPP ;
recevoir (11-3-2), par la station de base (1c-10), un message de réponse comprenant des informations relatives à la localisation du terminal, sur la base du premier message RRC ;
transmettre (11-4), par la station de base (1c-10), un message de réponse à l'AMF, et
dans le cas où le terminal est en état d'inactivité :
transmettre (1m-2), par l'AMF, une demande de localisation de service, LCS, à la LMF CN ;
transmettre (1m-3-1) à l'AMF, par la LMF CN, un message LPP destiné au terminal ;
recevoir (1m-3-2), par la station de base (1c-10), en provenance de l'AMF, un premier message de strate de non-accès, NAS, comprenant le message LPP ;
transmettre (1m-3-3), par la station de base (1c-10), au terminal, un deuxième message RRC comprenant le premier message NAS ;
recevoir (1m-3-4), par la station de base (1c-10), en provenance du terminal, un message de réponse LPP dans un deuxième message NAS inclus dans un troisième message RRC ;
transmettre (1m-3-5), par la station de base (1c-10), à l'AMF, le deuxième message NAS avec le message de réponse LPP,
recevoir (1m-3-6), par la LMF CN, en provenance de l'AMF, le message de réponse LPP ; et
générer et transmettre (1m-4) à l'AMF, par la LMF CN, une réponse LCS basée sur le message de réponse LPP ;
dans lequel les informations de demande comprennent des informations permettant de reconnaître le terminal.

2. Procédé de la revendication 1, dans lequel les informations de demande comprennent des informations pour reconnaître le terminal (1c-15), ou des informations sur la station de base (1c-10) à laquelle le terminal se connecte.

3. Procédé de la revendication 1, dans lequel le premier message RRC comprend un indicateur correspondant à la LMF locale, ou comprend les informations de protocole dans un élément d'information, IE, correspondant à la LMF locale.

4. Système de fourniture d'un service basé sur la localisation, comprenant :
une fonction de gestion d'accès, AMF,
une station de base (1c-10) et une fonction de gestion de localisation de réseau central, LMF CN,
l'AMF, la station de base et la LMF CN étant configurées pour exécuter le procédé de la revendication 1.

5. Système de la revendication 4, dans lequel les informations de demande comprennent des informations d'identification sur le terminal (1c-15), ou des informations sur la station de base à laquelle le terminal se connecte.

6. Système de la revendication 4, dans lequel le premier message RRC comprend un indicateur correspondant à la LMF locale, ou comprend les informations de protocole dans un élément d'information, IE, correspondant à la LMF locale.
